# EUROPEAN PATENT APPLICATION

(11) **EP 4 726 220 A1**
(43) Date of publication of application: **15.04.2026**
(21) Application number: 24819068.8
(22) Date of filing: 07.05.2024
(51) Int. Cl.: F15B 21/044, F16K 31/06, F16K 51/00

(54) **HYDRAULIC SYSTEM FOR WORK MACHINE, WORK MACHINE, AND METHOD FOR CONTROLLING WORK MACHINE**

(30) Priority: 08.06.2023 JP 2023094837
(71) Applicant: KUBOTA CORPORATION, Osaka-shi, Osaka 556-8601 (JP)
(72) Inventor: GONO Tsuyoshi, Sakai-shi, Osaka 590-0908 (JP); TAKEOKA Susumu, Sakai-shi, Osaka 590-0908 (JP); NIHEI Naoya, Sakai-shi, Osaka 590-0908 (JP); KAIHORI Kuya, Sakai-shi, Osaka 590-0908 (JP); KISHIMOTO Takumi, Sakai-shi, Osaka 590-0908 (JP)
(74) Representative: Müller-Boré & Partner Patentanwälte PartG mbB
(86) International application number: PCT/JP2024/016987
(87) International publication number: WO 2024/252831

(57) **Abstract**

The present invention easily reduces the influence of air entrainment in hydraulic fluid in fluid chambers (E1, E2, DE) on a hydraulic device (C). A hydraulic system (S) for a working machine (1) includes: a hydraulic pump (P); a hydraulic device to be actuated by hydraulic fluid delivered by the hydraulic pump to drive the working machine; a solenoid proportional valve (SV) to adjust a flow rate and/or a pressure of hydraulic fluid supplied from the hydraulic pump to the hydraulic device; and a controller (70) configured or programmed to control the solenoid proportional valve. The solenoid proportional valve includes: a housing (80); a spool (83) housed in the housing; a coil (85) to be controlled by the controller, and a moving portion (87) to be caused by a magnetic flux generated by the coil to move the spool. The housing includes a fluid chamber to store hydraulic fluid, the fluid chamber having a volume that changes with movement of the spool. The controller is configured or programmed to include an air-bleeding mode in which the controller controls the coil to cause the moving portion to reciprocate a plurality of times in an axial direction of the spool.

## Description

### Technical Field

The present invention relates to hydraulic systems for working machines, working machines, and methods of controlling working machines.

### Background Art

A hydraulic control valve disclosed in Patent Literature 1 (PTL1) includes a main assembly, a linear solenoid assembly and a valve system assembly. The main assembly includes a valve body and a housing. The linear solenoid assembly includes a coil provided in the house and wound around a coil bobbin, and a movable core which is attracted to a fixed core when the coils are energized. The valve system assembly includes a spool provided in the valve body and shiftable between a position where an inlet port and an outlet port communicate with each other and a position where the outlet port and a drain port communicate with each other. The valve body includes a damper fluid chamber which includes a recessed opening that faces a mount face to absorb a self-induced vibration of the spool, and a fluid reservoir chamber that is adjacent to the damper fluid chamber and communicates with the drain port via a communication passage.

### Citation List

### Patent Literature

PTL 1: Japanese Unexamined Patent Application Publication No.2009-103219

### Summary of Invention

### Technical Problem

In the hydraulic control valve of Patent Literature 1, the fluid reservoir chamber which communicates with the damper fluid chamber is formed in the valve body so that air bubbles generated in hydraulic fluid in the damper fluid chamber are ejected into the fluid reservoir chamber to reduce an influence of air entrainment in the hydraulic fluid in the damper fluid chamber on a control-target hydraulic device.

However, bubbles may be generated in hydraulic fluid in an accommodating portion which accommodates the linear solenoid assembly as well as the hydraulic fluid in the damper fluid chamber. In order to eject the bubbles generated in the accommodating portion or the fluid reservoir chamber, it is necessary to provide, in addition to the fluid reservoir chamber, a communication passage to communicate with the fluid reservoir chamber, which increases costs for manufacturing the hydraulic control valves.

In view of the above issue, an object of the present invention is to provide a hydraulic system for a working machine, a working machine and a method of controlling a working machine to easily reduce the influence of air entrainment in hydraulic fluid in fluid chambers on a control-target hydraulic device.

### Solution to Problem

According to an example embodiment of the present invention, a hydraulic system for a working machine includes a hydraulic pump, a hydraulic device to be actuated by hydraulic fluid delivered by the hydraulic pump to drive the working machine, a solenoid proportional valve to adjust a flow rate and/or a pressure of hydraulic fluid supplied from the hydraulic pump to the hydraulic device; and a controller configured or programmed to control the solenoid proportional valve. The solenoid proportional valve includes a housing, a spool housed in the housing, a coil to be controlled by the controller, and a moving portion to be caused by a magnetic flux generated by the coil to move the spool. The housing includes a fluid chamber to store hydraulic fluid, the fluid chamber having a volume that changes with movement of the spool. The controller is configured or programmed to include an air-bleeding mode in which the controller controls the coil to cause the moving portion to reciprocate a plurality of times in an axial direction of the spool.

The controller may be configured or programmed to, in a normal mode, cause the moving portion to move from a first position to a second position in the axial direction; and in the air-bleeding mode, cause the moving portion to reciprocate between the first position and a third position a plurality of times, the third position being further away from the first position than the second position is from the first position in the axial direction.

The second position may be a position in which a pressure of hydraulic fluid by which the hydraulic device is actuated is at a maximum.

The third position may be an end position in which the moving portion abuts an inner wall of the housing.

The solenoid proportional valve may include a solenoid core to be caused by the magnetic flux generated by the coil to attract the moving portion, the solenoid core defining a portion of the inner wall of the housing. The third position may be the end position in which the moving portion abuts the solenoid core.

The first position may be a position in which the pressure of hydraulic fluid supplied from the hydraulic pump to the hydraulic device via the solenoid proportional valve is zero.

The first position may be an initial position in which electricity is not supplied to the coil.

The fluid chamber may be partitioned by the moving portion into a plurality of fluid chambers each of which has a volume that changes as the moving portion moves.

The moving portion may include a plunger including a magnetic material to be moved by the magnetic flux generated by the coil. The housing may include a communication passage via which the plurality of fluid chambers and a periphery of the spool communicate with each other.

The hydraulic system may include a hydraulic fluid tank to store hydraulic fluid. The housing may include a plurality of ports to communicate with each other in a manner that is changed by the spool. The communication passage may communicate with a tank port which is one of the plurality of ports that communicates with the hydraulic fluid tank.

According to an example embodiment of the present invention, a working machine includes the hydraulic system; a machine body including the hydraulic pump, the hydraulic device, and the solenoid proportional valve; and a working device and/or a traveling device provided in or on the machine body and driven by the hydraulic device.

The working machine may include a first manual operator to be operated; a prime mover to supply power to the hydraulic pump; and a second manual operator to be operated to start the prime mover, the second manual operator being different from the first manual operator. The controller may be configured or programmed to be allowed to enter the air-bleeding mode when the second manual operator is operated together with the first manual operator.

The controller may be configured or programmed to communicably connect to an external terminal; and be allowed to enter the air-bleeding mode according to a signal outputted from the external terminal.

The controller may be configured or programmed to end the air-bleeding mode when the moving portion has reciprocated a predetermined number of times during the air-bleeding mode.

The working machine may include a display to display information. The display may be configured to display, when the controller has ended the air-bleeding mode, a screen indicating that the air-bleeding mode has ended.

The working machine may include a display to display information and a detector to detect an anomaly in the solenoid proportional valve and/or the hydraulic device. The display may be configured to display a screen asking for a shift to the air-bleeding mode when the detector has detected an anomaly.

The working machine may include a display to display information. The controller may be configured or programmed to determine that the solenoid proportional valve has been replaced. The display may be configured to display, when the controller has determined that the solenoid proportional valve has been replaced, a screen asking for a shift to the air-bleeding mode.

According to another example embodiment of the present invention, a method of controlling a working machine which includes a hydraulic pump; a hydraulic device to be actuated by hydraulic fluid delivered by the hydraulic pump to drive the working machine; a solenoid proportional valve including a fluid chamber to store hydraulic fluid, the fluid chamber having a volume that changes with movement of a spool, the solenoid valve being configured to adjust a flow rate and/or a pressure of hydraulic fluid supplied from the hydraulic pump to the hydraulic device; and a controller configured or programmed to control the solenoid proportional valve, comprises the step of causing the controller to control a coil included in the solenoid proportional valve to cause a moving portion, which is configured to be caused by a magnetic flux generated by the coil to push the spool, to reciprocate a plurality of times in an axial direction of the spool.

### Advantageous Effects of Invention

According to the above-mentioned hydraulic system, the above-mentioned working machine, and the above-mentioned method of controlling the working machine, it is possible to easily reduce an influence of air entrainment in hydraulic fluid in fluid chambers on a control-target hydraulic device.

### Brief Description of Drawings

[FIG. 1] FIG. 1 is a side view of a working machine.
[FIG. 2] FIG. 2 illustrates a schematic configuration of a hydraulic system.
[FIG. 3] FIG. 3 illustrates a display included in a meter panel.
[FIG. 4] FIG. 4 illustrates an entirety of a transmission device.
[FIG. 5] FIG. 5 is an inner view of a solenoid proportional valve and a valve body.
[FIG. 6] FIG. 6 is an inner view of a solenoid proportional valve and a valve body.
[FIG. 7] FIG. 7 illustrates examples of graphs showing a pressure of hydraulic fluid supplied from a hydraulic pump to a hydraulic device via a solenoid proportional valve in a case where bubbles have been generated in hydraulic fluid of fluid chambers and a case where bubbles have not been generated in hydraulic fluid of fluid chambers.
[FIG. 8] FIG. 8 is an inner view of a solenoid proportional valve and a valve body.
[FIG. 9] FIG. 9 illustrates two diagrams explaining movements of a solenoid proportional valve during an air-bleeding mode.
[FIG. 10] FIG. 10 illustrates an example of a first selection screen.
[FIG. 11] FIG. 11 illustrates an example of a second selection screen.
[FIG. 12] FIG. 12 illustrates an example of an ending screen.
[FIG. 13] FIG. 13 illustrates a schematic configuration of a hydraulic system in a first variation.
[FIG. 14] FIG. 14 illustrates a schematic configuration of a hydraulic system in a second variation.
[FIG. 15] FIG. 15 illustrates an example of a presentation screen.
[FIG. 16] FIG. 16 illustrates a schematic configuration of a hydraulic system in a third variation.
[FIG. 17] FIG. 17 illustrates a schematic configuration of a hydraulic system in a fourth variation.
[FIG. 18] FIG. 18 illustrates a diagram describing a series of processes related to an air-bleeding mode of the controller.

### Description of Embodiments

The following describes embodiments of the present invention based on illustrations.

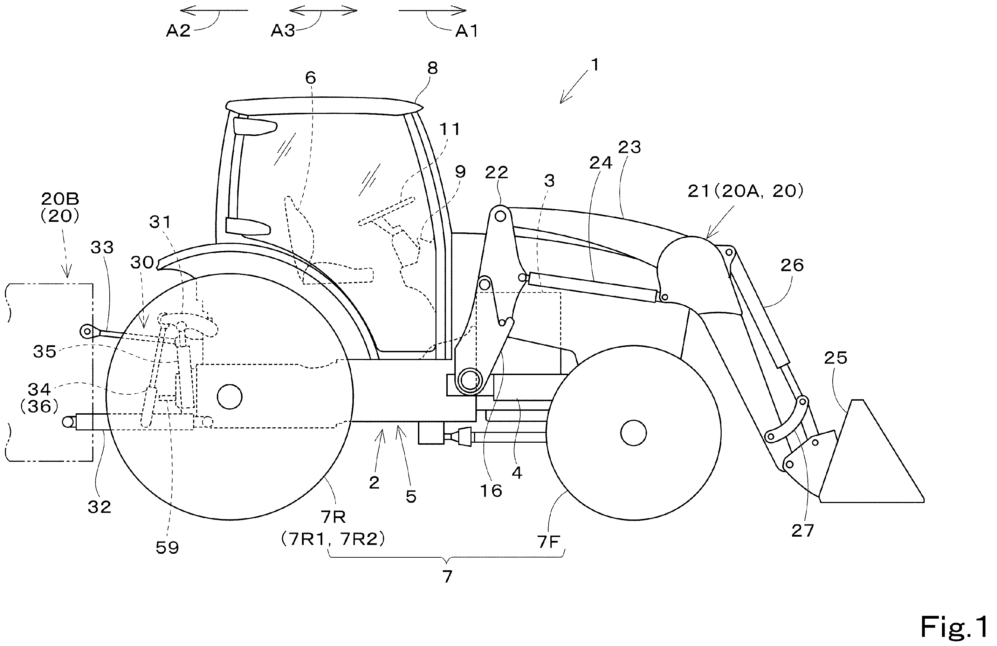

FIG. 1 illustrates a working machine 1 according to an example embodiment. The present example embodiment describes a tractor with a working device attached thereto as the working machine 1. However, the working machines 1 may include agricultural machines to perform agricultural work such as rice-transplanters, construction machines for construction work such as backhoes, skid steer loaders, or wheel loaders, and/or the like.

In the example embodiments of the present invention, a direction in which a user faces when sitting on a driver's seat 6 of the working machine 1 (direction of an arrow A1 in FIG 1) is called "front", and an opposite direction (direction of an arrow A2 in FIG. 1) is called "rear". A right side of the user (front side of FIG. 1) is called "right", and a left side of the user (back side of FIG. 1) is called "left". A horizontal direction perpendicular to a front-rear direction of the working machine 1 (direction of an arrow A3 in FIG. 1) is called "machine body width" (or "width direction").

As illustrated in FIG. 1, the working machine 1 includes a machine body (vehicle body) 2, a traveling device 7 which includes front wheels 7F and rear wheels 7R and supports the machine body 2 to enable the machine body 2 to travel, and a protective structure 8 (for example, a cabin, a canopy or the like) provided above the machine body 2 to surround the driver's seat 6 on which a user may be seated and the like.

As shown in FIG. 1, the machine body 2 includes a prime mover 3 defining a power source, a front portion frame 4 and a transmission 5.

The prime mover 3 is a device to generate power (driving power) and includes an internal combustion engine such as a gasoline engine or a diesel engine, and/or an electrical motor and/or the like. In the present example embodiment, the prime mover 3 includes a diesel engine.

The front portion frame 4 is connected to the prime mover 3 and projects frontward therefrom. The front portion frame 4 is supported by the front wheels 7F.

The transmission 5 is configured to transmit driving power generated by the prime mover 3 to the traveling device 7 and to change a speed of rotation caused by the driving power. The transmission 5 is also configured to cause the traveling device 7 to selectively travel forward or travel rearward. Thus, the transmission 5 can change a propulsion power of the traveling device 7. The transmission 5 is connected to a rear portion of the prime mover 3 and extends rearward from the prime mover 3. A rear portion of the transmission 5 is supported by the rear wheels 7F.

The traveling device 7 includes the front wheels 7F and the rear wheels 7R. The rear wheels 7R include a first rear wheel 7R1 provided on one side (left side) in a machine body width direction of the machine body 2, and a second rear wheel 7R2 provided on another side (right side) in the machine body width direction of the machine body 2. The second rear wheel 7R2 is spaced from the first rear wheel 7R1 in the machine body width direction. The front wheels 7F may include tires or may be provided with crawlers. The rear wheels 7R may include tires or may be provided with crawlers.

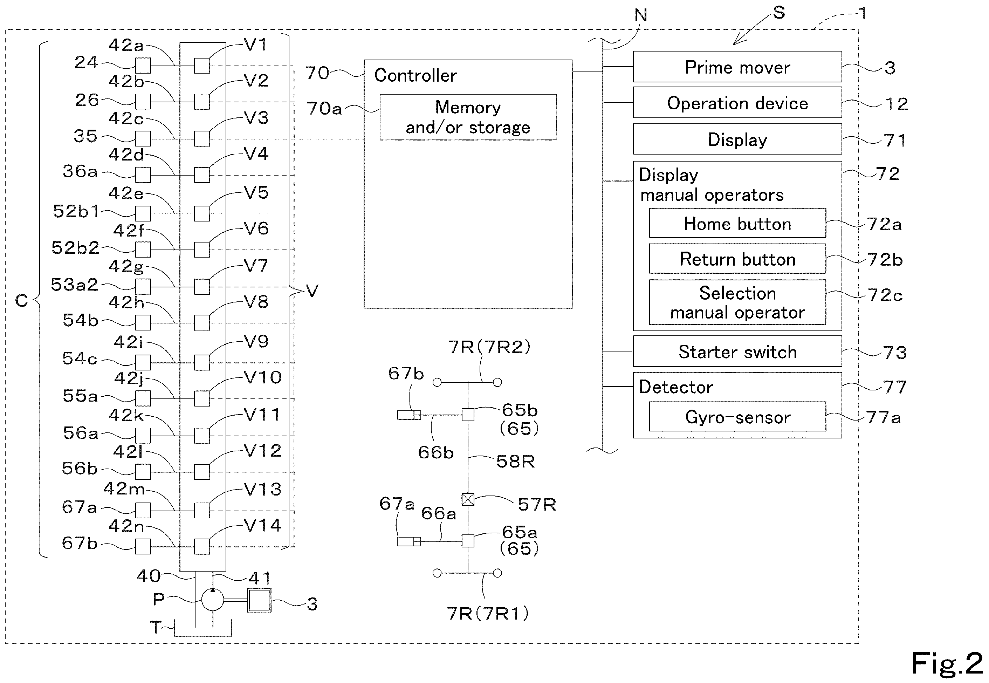

FIG. 2 illustrates a schematic configuration of a hydraulic system S. As shown in FIG. 2, the working machine 1 includes the hydraulic system S which is a system to drive the working machine 1 via hydraulic fluid. As shown in FIG. 2, the working machine 1 (hydraulic system S) includes a controller 70, a display 71, a hydraulic fluid tank T, a hydraulic pump P, a control valve V and one or more hydraulic devices C.

The controller 70 includes one or more electrical/electronic circuits, one or more CPUs, one or more MPUs, one or more storages and/or one or more memories with programs therein and/or the like. The controller 70 is configured or programmed to control various devices included in the working machine 1. The devices provided in/on the working machine 1 are electrically connected to the controller 70 via an in-vehicle network N such as CAN, ISOBUS, LIN, or FlexRay.

For example, the controller 70 is electrically connected to a starter switch 73 and the prime mover 3 included in the working machine 1, and is configured or programmed to start or stop relevant parts including the prime mover 3 according to an operation of the starter switch 73. The starter switch 73 is a manual operator to at least start the prime mover 3. The starter switch 73 is provided inside of the protective structure 8 and is operable so as to be operated by the user sitting on the driver's seat 6. When the user switches on the starter switch 73, the controller 70 is configured or programmed to start the relevant parts included in the working machine 1. When the user operates the starter switch 73 is switched off, the controller 70 is configured or programmed to stop the relevant parts included in the working machine 1.

The controller 70 includes a memory (or storage) 70a. The memory 70a is a nonvolatile memory or the like and stores various kinds of information and/or the like related to controls to be performed by the controller 70.

The display 71 is configured to display various kinds of information. The display 71 includes any one of liquid crystal panels, touch panels or other panels. For example, the display 71 may be a monitor mounted in a meter panel 10 which is provided forward of the driver's seat 6.

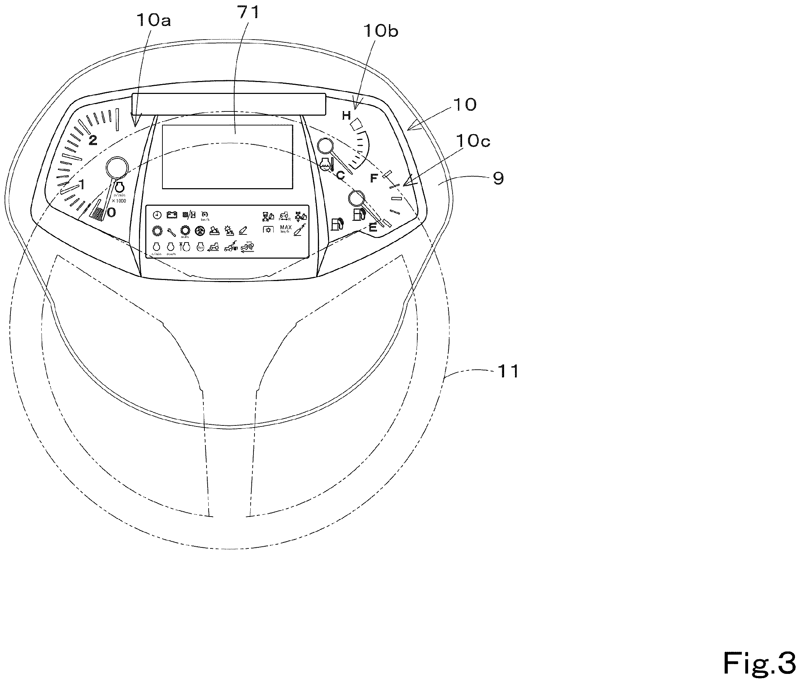

FIG. 3 illustrates a display mounted in the meter panel 10. The meter panel 10 is located at an upper portion of a column cover of a console 9 and forward of a steering wheel 11. The meter panel 10 includes an engine rotation meter 10a to indicate a rotation speed of the prime mover 3, a water temperature meter 10b, a fuel meter 10c and the display 71. The display 71 is electrically connected to the controller 70 and/or the like via the in-vehicle network N. The display 71 is configured or programmed to acquire various kinds of information from instruments, such as the controller 70 and various sensors, connected thereto via the in-vehicle network N, and indicate the acquired various kinds of information. In the present example embodiment, the controller 70 controls the display 71 to change information displayed thereon.

As shown in FIG. 2, the working machine 1 includes display manual operators 72 to operate the display 71. The display manual operators 72 are located at a position where they can be easily operated by the user seated on the driver's seat 6. For example, the display manual operators 72 are located on an arm rest or in the vicinity of the display 71.

The display manual operators 72 may include a button switch to be pressed (tactile switch), a slide switch to be slidden, and/or a dial-shaped switch (dial switch) such as a selector switch including a plurality of switching positions. In the present example embodiment, the display manual operators 72 include push-button switches and a dial switch.

The push-button switches of the display manual operators 72 in the working machine 1 include, for example, a home button 72a to change a screen displayed on the display 71 to a predetermined initial screen, and a return button 72b to transition a screen displayed on the display 71 to the previous screen. The dial switch of the display manual operators 72 in the working machine 1 is a selection manual operator 72c to select and determine one of optional items displayed on the display 71. The selection manual operator 72c is operable to be rotated by a user to receive selection of the optional item from the optional items displayed on the display 71. The selection manual operator 72c is operable to be pressed by the user to receive determination of the selected optional item.

In the above-mentioned example embodiment, the exemplary display manual operators 72 are described to include one or more push-button switches and one or more dial switches. However, the display manual operators 72 are not limited to physical manual operators, and may be, in a case where the display 71 includes an operable touch panel, images displayed on the display 71 (graphical interface).

The display 71 need only be able to display information and is not limited to such a monitor included in the meter panel 10 as described above. That is, the display 71 may be a terminal display located in the vicinity of the user sitting on the driver's seat 6 or may be a mobile terminal held by the user. The mobile terminal may be a PC, a smartphone (multifunction phone) with a relatively high computing power, or the like. In such a case, the mobile terminal includes a device to directly or indirectly communicate with the in-vehicle network N and is able to acquire, via the device, various pieces of information from the control-target device connected to the in-vehicle network N and to display the acquired piece or pieces of information.

The hydraulic fluid tank T includes a tank to store hydraulic fluid. The hydraulic fluid tank T is fluidly connected to a fluid draining passage 40 to drain hydraulic fluid to the fluid tank T.

The hydraulic pump P operates according to the power (driving power) generated by the prime mover 3, and delivers hydraulic fluid. The hydraulic pump P includes a fixed displacement gear pump. Specifically, the hydraulic pump P is interposed between the hydraulic fluid tank T and a fluid delivery passage 41, and is configured to deliver hydraulic fluid having been stored in the hydraulic fluid tank T to the fluid delivery passage 41.

In the following description, a portion of hydraulic fluid delivered from the hydraulic pump P to be used for hydraulic control may be referred to as pilot fluid, and a pressure of the pilot fluid may be referred to as pilot pressure.

FIG. 2 illustrates a single pump as the hydraulic pump P. However, the working machine 1 (hydraulic system S of the working machine 1) may include a plurality of hydraulic pumps P, may use one or more variable displacement hydraulic pumps P (piston pumps) as the hydraulic pump P, and may control a flow rate of hydraulic fluid delivered from the hydraulic pump P by a load sensing control (control by a load sensing system).

One or more control valves V are each configured to adjust a flow rate and/or a pressure of hydraulic fluid supplied from the hydraulic pump P to a corresponding one of the hydraulic devices C. The working machine 1 includes the one or more control valves V that correspond in number to the hydraulic devices C provided therein. In the present example embodiment, the working machine 1 includes a plurality of control valves V. The control valves V include one or more solenoid valves each having a solenoid to be energized and demagnetized to change an extent of opening thereof, one or more pilot-controlled switching valves each having a spool 83 and a pressure receiving portion configured such that the spool 83 is moved to change an extent of opening thereof according to pilot fluid that is applied to the pressure receiving portion from a solenoid valve or an operation valve actuated by manual operation on an operation device 12, and/or the like. The operation device 12 includes one or more levers one or more switches, and/or the like.

The one or more hydraulic devices C are actuated by hydraulic fluid delivered by the hydraulic pump P to drive the working machine 1. In the present example embodiment, the working machine 1 includes a plurality of hydraulic devices C. The hydraulic devices C include one or more hydraulic actuators such as one or more hydraulic cylinders and/or one or more hydraulic motors to be driven by hydraulic fluid, one or more hydraulic clutches each controlled by hydraulic fluid to switch between a position to selectively allow or intermit transmission of power (driving power) therethrough, and/or one or more traveling hydraulic pumps each to output a power variable as an angle of a swash plate is changed by a servo cylinder or the like to which the pilot fluid is applied. The hydraulic devices C are actuated by the hydraulic fluid to drive the working machine 1 by driving the working device 20 and/or the traveling device 7. The present example embodiment describes an exemplary case where the hydraulic devices C are actuated to drive both the working device 20 and the traveling device 7. However, the hydraulic device C need only be able to drive at least one of the working device 20 or the traveling device 7.

The following describes the one or more working devices 20 in detail. As shown in FIG. 1, the working machine 1 includes the one or more working devices (implements) 20 to perform work. The working machine 1 of the present example embodiment is configured to have the one or more working devices 20 connected to a front portion of the machine body 2 and/or to a rear portion of the machine body 2. The following refers to the working device 20 attached to the front portion of the machine body 2 as a "front working device" and to the working device 20 attached to the rear of the machine body 2 as a "rear working device".

A front loader 21 is illustrated as an exemplary front working device 20A. The front working device 20A is not limited to the front loader 21 and may be another working device 20 such as a sweeper.

The front loader 21 includes a support frame 22, a boom 23, a boom cylinder 24 (hydraulic device C), a working tool 25 and a working tool cylinder 26 (hydraulic device C). The front loader 21 is connected to a mounting frame 16 provided at the front portion of the machine body 2. The support frame 22, the boom 23, the boom cylinder 24, the working tool 25 and the working tool cylinder 26 are provided on each of opposite sides of the machine body 2 in a width direction thereof. The boom cylinders 24 and the working tool cylinders 26 each include a double-acting hydraulic cylinder.

The support frames 22 are detachably connected to the mounting frame 16. The booms 23 are supported by upper portions of the respective support frames 22 pivotally in an up-down direction around respective axial centers thereof which extend in the machine body width direction.

The boom cylinders 24 are each interposed between the corresponding support frame 22 and the corresponding boom 23, and telescopically moved to pivot the corresponding boom 23.

As shown in FIG. 2, the boom cylinders 24 are fluidly connected to a first control valve V1 via a first fluid passage 42a. The first control valve V1 is configured to control the telescopic movements of the boom cylinders 24. The first control valve V1 is fluidly connected to the first fluid passage 42a, the fluid draining passage 40 and the fluid delivery passage 41. The first control valve V1 is configured to change the extent of opening thereof to adjust a flow rate of hydraulic fluid supplied from the hydraulic pump P to the boom cylinders 24, and/or adjust a flow rate of hydraulic fluid discharged from the boom cylinders 24 to the hydraulic fluid tank T.

A bucket is illustrated as one of exemplary working tools 25 in the present example embodiment. The working tool 25 is provided across a distal end of a left boom 23 and a distal end of a right boom 23, and is connected to the left and right booms 23 pivotally to raise (scoop) and lower (dump) something.

The exemplary working tools 25 may include manure forks, palette forks, hay forks, bale forks, roll grabs, container buckets and/or the like.

The working tool cylinders 26 are each pivotally supported at one of opposite ends thereof by an intermediate portion of the corresponding boom 23, and connected at another of the opposite ends thereof to the working tool 25 and a distal end of the corresponding boom 23 via a corresponding linkage 27, and are telescopically moved to pivot the working tool 25.

As shown in FIG. 2, the working tool cylinders 26 are fluidly connected to a second control valve V2 via a second fluid passage 42b. The second control valve V2 is configured to control the telescopic movements of the working tool cylinders 26. The second control valve V2 is fluidly connected to the second fluid passage 42b, the fluid draining passage 40 and the fluid delivery passage 41. The second control valve V2 is configured to adjust a flow rate of hydraulic fluid supplied from the hydraulic pump P to the working tool cylinders 26 by changing an extent of opening thereof, and/or adjust a flow rate of hydraulic fluid discharged from the working tool cylinders 26 to the hydraulic fluid tank T.

Rear working devices 20B include cultivators to perform cultivation work, fertilizer spreaders to spread fertilizer, agricultural chemical spreaders to spread agricultural chemicals, harvesters to harvest crops, mowers to mow grass or the like, tedders to ted grass or the like, rakes to rake grass or the like, balers to bale grass or the like, and/or the like. As shown in FIG. 1, the working machine 1 includes a coupling device (lifter) 30 to connect the rear working device 20B to the machine body 2. The lifter 30 is provided at the rear portion of the machine body 2 to move up and down the rear working device 20B attached thereto.

As shown in FIG. 1, the lifter 30 includes lift arms 31, lower links 32, a top link 33, lift rods 34 and lift cylinders 35. Front-end portions of the lift arms 31 are pivotally supported by a rear upper portion of a casing (transmission casing) accommodating the transmission 5 to be movable upward and downward. The lift arms 31 pivot (move up and down) according to actuation of the lift cylinders 35. The lift cylinders 35 each include a single acting hydraulic cylinder.

As shown in FIG. 2, the lift cylinders 35 are fluidly connected to a third control valve V3 via a third fluid passage 42c. The third control valve V3 is configured to control the lift cylinders 35 so as to be operable to extend the lift cylinders 35. The third control valve V3 is fluidly connected to the third fluid passage 42c, the fluid draining passage 40 and the fluid delivery passage 41. The third control valve V3 is configured to adjust a flow rate of hydraulic fluid supplied from the hydraulic pump P to bottom-side chambers of the lift cylinders 35 such as to extend the lift cylinders 35 and to cause the rear working device 20B to move up. On the other hand, the third control valve V3 is configured to cause the rear working device 20B to move down due to a self-weight thereof by draining hydraulic fluid from the lift cylinders 35 to the hydraulic fluid tank T. The third control valve V3 is configured to maintain the rear working device 20B at a height by keeping hydraulic fluid from being drained from the lift cylinders 35.

As shown in FIG. 1, front end portions of the lower links 32 are pivotally supported by a rear-lower portion of the transmission 5 to be movable upward and downward. A front end portion of the top link 33 is pivotally supported above the lower links 32 by the rear portion of the transmission 5 to be movable upward and downward. The lift rods 34 connect the respective lift arms 31 and the respective lower links 32. The rear working device 20B is connected to rear portions of the lower links 32 and a rear portion of the top link 33. When the lift cylinders 35 are actuated (telescopically moved), the lift arms 31 move up or down, and the lower links 32 connected to the respective lift arms 31 via the respective lift rods 34 move up or down. Thus, the rear working device 20B swings upward and downward (moves up and down) with the front portions of the lower links 32 as a fulcrum.

An angle changer 36 (hydraulic device C) may be provided on/in at least one of the pair of lift rods 34 of the lifter 30. The angle changer 36 is configured to change a posture of the rear working device 20B attached to the machine body 2. The angle changer 36 includes a changing cylinder 36a which includes a hydraulic cylinder.

As shown in FIG. 2, the changing cylinder 36a is fluidly connected to a fourth control valve V4 via a fourth fluid passage 42d. The fourth control valve V4 is configured to control the changing cylinder 36a so as to be operable to extend the changing cylinder 36a. The fourth control valve V4 is connected to the fourth fluid passage 42d, the fluid draining passage 40 and the fluid delivery passage 41. The fourth control valve V4 is configured to adjust a flow rate of hydraulic fluid supplied from the hydraulic pump P to a bottom-side chamber of the changing cylinder 36a such as to extend the changing cylinder 36a, and is configured to adjust a flow rate of hydraulic fluid supplied from the hydraulic pump P to a rod-side chamber of the changing cylinder 36a such as to contract the changing cylinder 36a.

The present example embodiment shows a three-point linkage as an example of the lifter 30, but the lifter 30 is not limited to a three-point linkage mechanism and may, for example, be a two-point linkage mechanism.

A tractor is used as an example for the working machine 1 according to the present example embodiment. However, if the working machine 1 is a combine harvester, a backhoe or the like which includes a machine body 2 to which a working device 20 can be attached without the lifter 30, the working machine 1 may not include the lifter 30.

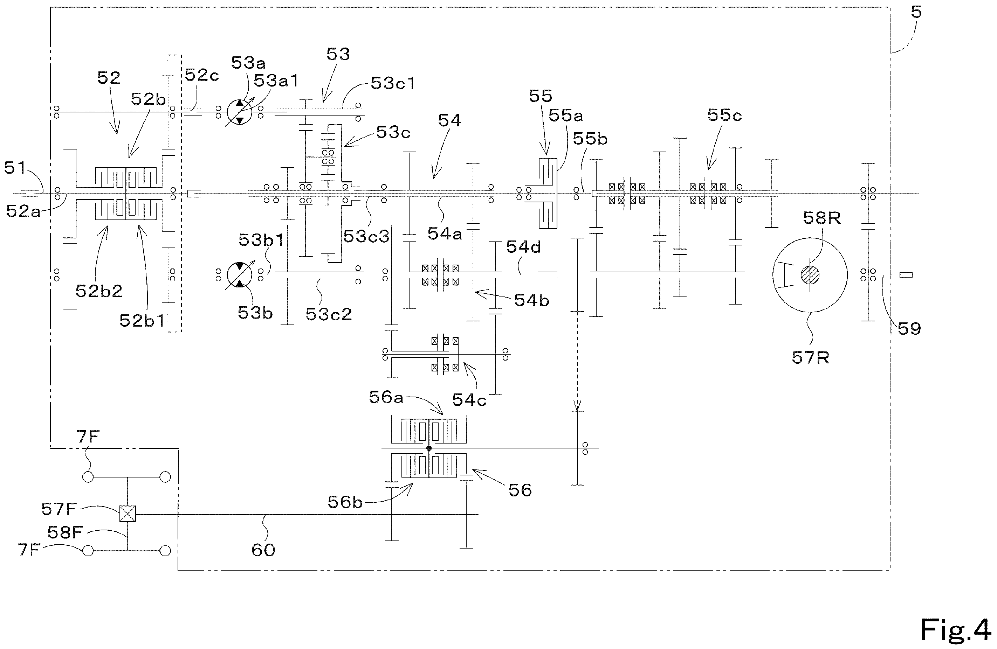

The following will describe in detail the transmission 5 to transmit power (driving power) to the traveling device 7 as a device including one or more hydraulic devices C to drive the traveling device 7. FIG. 4 illustrates an entirety of the transmission 5. As shown in FIG. 4, the transmission 5 includes a main shaft (propeller shaft) 51, a shuttle unit 52, a main transmission 53, an auxiliary transmission 54, a PTO (power takeoff) system 55 and a front transmission 56. The propeller shaft 51 is rotatably supported by the transmission 5 to receive driving power transmitted thereto from a crankshaft of the prime mover 3.

As shown in FIG. 4, the shuttle unit 52 includes a shuttle shaft 52a and a forward/reverse switching unit 52b. The shuttle shaft 52a is drivingly connected to the propeller shaft 51 to receive driving power transmitted from the propeller shaft 51.

The forward/reverse switching unit 52b includes, for example, a hydraulic clutch that selectively engages or disengages to switch a rotation direction of the shuttle shaft 52a such that the working machine 1 selectively travels forward or travels rearward.
Specifically, the forward/reverse switching unit 52b includes a forward clutch 52b1 (hydraulic device C) and a rearward clutch 52b2 (hydraulic device C).

As shown in FIG. 2, the forward clutch 52b1 is fluidly connected to a fifth control valve V5 via a fifth fluid passage 42e. The fifth control valve V5 is configured to control the forward clutch 52b1 to selectively allow or intermit transmission of power therethrough.
The fifth control valve V5 is fluidly connected to the fifth fluid passage 42e, the fluid draining passage 40 and the fluid delivery passage 41. The fifth control valve V5 is configured to, by changing an extent of opening thereof, adjust a flow rate of hydraulic fluid supplied from the hydraulic pump P into an inner portion of a clutch housing of the forward clutch 52b1, and/or adjust a flow rate of hydraulic fluid discharged from the clutch housing of the forward clutch 52b1 to the hydraulic fluid tank T.

For example, when the extent of opening of the fifth control valve V5 is changed to supply hydraulic fluid into the inner portion of the clutch hosing of the forward clutch 52b1, one or more friction disks are pressed against the clutch housing. Thus, the forward clutch 52b1 engages to transmit the driving power to an output shaft 52c.

On the other hand, when the extent of opening of the fifth control valve V5 is changed to discharge hydraulic fluid from the inner portion of the clutch housing of the forward clutch 52b1, the one or more friction disks are separated away from the clutch housing. Thus, the forward clutch 52b1 disengages so as not to transmit the driving power to the output shaft 52c.

As shown in FIG. 2, the rearward clutch 52b2 is fluidly connected to a sixth control valve V6 via a sixth fluid passage 42f. The sixth control valve V6 is configured to control the rearward clutch 52b2 to selectively allow or intermit transmission of power therethrough. The sixth control valve V6 is fluidly connected to the sixth fluid passage 42f, the fluid draining passage 40 and the fluid delivery passage 41. The sixth control valve V6 is configured to, by changing an extent of opening thereof, adjust a flow rate of hydraulic fluid supplied from the hydraulic pump P into an inner portion of a clutch housing of the rearward clutch 52b2, and/or adjust a flow rate of hydraulic fluid discharged from the clutch housing of the rearward clutch 52b2 to the hydraulic fluid tank T.

For example, when the extent of opening of the sixth control valve V6 is changed to supply hydraulic fluid into the inner portion of the clutch housing of the rearward clutch 52b2, one or more friction disks are pressed against the clutch housing. Thus, the rearward clutch 52b2 engages to transmit the driving power to the output shaft 52c.

On the other hand, when the extent of opening of the sixth control valve V6 is changed to discharge hydraulic fluid from the inner portion of the clutch housing of the rearward clutch 52b2, the one or more friction disks are separated away from the clutch housing. Thus, the rearward clutch 52b2 disengages so as not to transmit the driving power of the propeller shaft 51 to the output shaft 52c.

The main transmission 53 includes a continuous variable transmission mechanism to steplessly change a speed of a driving power (rotational driving power) transmitted therethrough. As shown in FIG. 4, the continuous variable transmission mechanism includes a traveling hydraulic pump 53a (hydraulic device C), a traveling motor 53b (hydraulic motor) and a planetary gear mechanism 53c.

The traveling hydraulic pump 53a is driven by the driving power transmitted from the output shaft 52c of the shuttle unit 52. The traveling hydraulic pump 53a includes, for example, an HST pump. The traveling hydraulic pump 53a is a swash plate variable displacement pump including a swash plate 53a1 and a servo cylinder 53a2 that is actuated by pilot pressure to change an angle of the swash plate 53a1. As shown in FIG. 2, the servo cylinder 53a2 is fluidly connected to a seventh control valve V7 via a seventh fluid passage 42g. The seventh control valve V7 is configured to adjust a pilot pressure applied to the servo cylinder 53a2 to control the swash plate 53a1. The seventh control valve V7 is fluidly connected to the seventh fluid passage 42g, the fluid draining passage 40 and the fluid delivery passage 41. The seventh control valve V7 has a variable extent of opening that is changed to adjust the pilot pressure applied to the servo cylinder 53a2 such as to change an output force (delivery rate of hydraulic fluid) and a delivery direction of hydraulic fluid from the traveling hydraulic pump 53a.

In FIG. 2, for explanatory convenience, the seventh control valve V7 connected to the servo cylinder 53a2 is illustrated as a single block. However, in a case where the servo cylinder 53a2 is a double-acting cylinder, two seventh control valves V7 are provided to control the servo cylinder 53a2, and in a case where the servo cylinder 53a2 is a single-acting cylinder, one seventh control valve V7 is provided to control the servo cylinder 53a2.

The traveling motor 53b includes an output shaft 53b1 and is configured to rotationally drive the output shaft 53b1 by hydraulic fluid delivered from the traveling hydraulic pump 53a via a fluid passage such as piping or the like. The traveling motor 53b is configured to change a rotation speed and a rotation direction of the output shaft 53b1 according to an output force of hydraulic fluid (flow rate, pressure, delivery direction of hydraulic fluid) delivered from the traveling hydraulic pump 53a.

As shown in FIG. 4, the planetary gear mechanism 53c includes a plurality of gears and power transmission shafts including input shafts 53c1 and 53c2 and an output shaft 53c3. The input shaft 53c1 receives the driving power generated by the prime mover 3 and transmitted via the traveling hydraulic pump 53a and/or the like. The input shaft 53c2 is drivingly connected to the output shaft 53b1 of the traveling motor 53b to receive the driving power transmitted from the traveling motor 53b. The output shaft 53c3 outputs driving power. The planetary gear mechanism 53c transmits, to the output shaft 53c3, a resultant driving power as combination of the driving power from the prime mover 3 and the driving power from the traveling motor 53b.

Accordingly, the main transmission 53 is configured to change the driving power outputted therefrom to the auxiliary transmission 54 by changing an angle of the swash plate 53a1 of the traveling hydraulic pump 53a, a rotation speed of the prime mover 3, and/or the like.

The present example embodiment describes the continuous variable transmission mechanism as an exemplary main transmission 53. However, the main transmission 53 may include a stepped transmission mechanism including multi-speed gears.

The auxiliary transmission 54 includes multi-speed gear trains (gears) to speed-change the rotational driving power transmitted therethrough. The auxiliary transmission 54 is configured to change a manner to selectively drivingly connect (mesh) the multi-speed gear trains so as to gearshift (change a speed of) a rotational driving power transmitted thereto from the output shaft 53c3 of the planetary gear mechanism 53c and output the gearshifted rotational driving power. As shown in FIG. 4, the auxiliary transmission 54 includes an input shaft 54a, a first shifting clutch 54b, a second shifting clutch 54c and an output shaft 54d.

The input shaft 54a is drivingly connected to the output shaft 53c3 of the planetary gear mechanism 53c to receive the driving power inputted (transmitted) thereto from the output shaft 53c3. The driving power transmitted to the input shaft 54a is inputted from the input shaft 54a to the first shifting clutch 54b and the second shifting clutch 54c via gears and/or the like. The auxiliary transmission 54 is configured to change a manner to engage and disengage the respective first and second shifting clutches 54b and 54c so as to gearshift the power inputted thereto and to output the gearshifted power to the output shaft 54d. In the present example embodiment, the auxiliary transmission 54 is configured to change the manner to engage and disengage the respective first and second shifting clutches 54b and 54c so as to enable gearshift between a first speed (low speed) stage and a second speed (high speed) stage.

As shown in FIG. 2, the first shifting clutch 54b is fluidly connected to an eighth control valve V8 via an eighth fluid passage 42h. The eighth control valve V8 is configured to control the first shifting clutch 54b to selectively allow or intermit transmission of power therethrough. The eighth control valve V8 is fluidly connected to the eighth fluid passage 42h, the fluid draining passage 40 and the fluid delivery passage 41. The eighth control valve V8 is configured to, by changing an extent of opening thereof, adjust a flow rate of hydraulic fluid supplied into an inner portion of a clutch housing of the first shifting clutch 54b from the hydraulic pump P and/or a flow rate of hydraulic fluid discharged from the first shifting clutch 54b to the hydraulic fluid tank T.

For example, when the extent of opening of the eighth control valve V8 is changed to supply hydraulic fluid into the inner portion of a clutch housing of the first shifting clutch 54b, one or more friction disks are pressed against the clutch housing. Thus, the first shifting clutch 54b engages.

On the other hand, when the extent of opening of the eighth control valve V8 is changed to discharge hydraulic fluid from the inner portion of the clutch housing of the first shifting clutch 54b, the one or more friction disks are separated away from the clutch housing. Thus, the first shifting clutch 54b disengages.

As shown in FIG. 2, the second shifting clutch 54c is fluidly connected to a ninth control valve V9 via a ninth fluid passage 42i. The ninth control valve V9 is configured to control the second shifting clutch 54c to selectively allow or intermit transmission of power therethrough. The ninth control valve V9 is connected to the ninth fluid passage 42i, the fluid draining passage 40 and the fluid delivery passage 41. The ninth control valve V9 is configured to, by changing an extent of opening thereof, adjust a flow rate of hydraulic fluid supplied from the hydraulic pump P into an inner portion of a clutch housing of the second shifting clutch 54c and/or a flow rate of hydraulic fluid discharged from the clutch housing of the second shifting clutch 54c to the hydraulic fluid tank T.

For example, when the extend of opening of the ninth control valve V9 is changed to supply hydraulic fluid into the inner portion of the clutch housing of the second shifting clutch 54c, one or more friction disks are pressed against the clutch housing. Thus, the second shifting clutch 54c engages.

On the other hand, when the extent of opening of the ninth control valve V9 is changed to discharge hydraulic fluid from the inner portion of the clutch housing of the second shifting clutch 54c, the one or more friction disks are separated away from the clutch housing. Thus, the second shifting clutch 54c disengages.

The output shaft 54d transmits power therefrom to a rear wheel differential gear unit 57R. The rear wheel differential gear unit 57R rotatably supports rear axles 58R with the respective rear wheels 7R attached thereto so as to allow the respective rear axles 58R to be driven.

As shown in FIG. 4, the PTO system 55 includes a PTO clutch 55a (hydraulic device C), a PTO propeller shaft 55b and a PTO transmission 55c. The PTO clutch 55a includes, for example, a hydraulic clutch and/or the like, and is configured to selectively allow or intermit transmission of transmission of the power of the propeller shaft 51 to the PTO propeller shaft 55b.

As shown in FIG. 2, the PTO clutch 55a is fluidly connected to a tenth control valve V10 via a tenth fluid passage 42j. The tenth control valve V10 is configured to control the PTO clutch 55a to selectively allow or intermit transmission of power therethrough. The tenth control valve V10 is fluidly connected to the tenth fluid passage 42j, the fluid draining passage 40 and the fluid delivery passage 41. The tenth control valve V10 is configured to adjust, by changing an extent of opening, a flow rate of hydraulic fluid supplied from the hydraulic pump P into an inner portion of a clutch housing of the PTO clutch 55a and/or adjust a flow rate of hydraulic fluid discharged from the clutch housing of the PTO clutch 55a to the hydraulic fluid tank T.

For example, when the extent of opening of the tenth control valve V10 is changed to supply hydraulic fluid into the inner portion of the clutch housing of the PTO clutch 55a, one or more friction disks are pressed against the clutch housing. Thus, the PTO clutch 55a engages to transmit power to the PTO propeller shaft 55b.

On the other hand, when the extent of opening of the tenth control valve V10 is changed to discharge hydraulic fluid from the inner portion of the clutch housing of the PTO clutch 55a, the one or more friction disks are separated away from the clutch housing. Thus, the PTO clutch 55a disengages so as not to transmit the power of the propeller shaft 51 to the PTO propeller shaft 55b.

The PTO transmission 55c includes a gearshift clutch and a plurality of gears and/or the like, and is configured to gearshift (change a speed of) driving power (rotational driving power) inputted thereto from the PTO propeller shaft 55. The PTO transmission 55c transmits the rotational driving power therefrom to a PTO shaft 59 via gears and/or the like.

As shown in FIG. 4, the front transmission 56 includes a first front-drive speed clutch 56a (hydraulic device C) and a second front-drive speed clutch 56b (hydraulic device C). The first front-drive speed clutch 56a and the second front-drive speed clutch 56b are configured to selectively allow or intermit transmission of the rotational driving power therethrough from the auxiliary transmission 54.

The power of the output shaft 54d is transmitted via, for example, gears and one or more driving shafts to combination of the first front-drive speed clutch 56a and the second front-drive speed clutch 56b. The driving power transmitted through the combination of the first front-drive speed clutch 56a and the second front-drive speed clutch 56b is transmitted to front axles 58F via a front driving shaft 60. The front driving shaft 60 is drivingly connected to a front wheel differential gear unit 57F. The front wheel differential gear unit 57F rotatably support front axles 58F with the respective front wheels 7F attached thereto so as to allow the front axles 58F to be driven. As shown in FIG. 4, the first front-drive speed clutch 56a and the second front-drive speed clutch 56b each include a hydraulic clutch and/or the like.

As shown in FIG. 2, the first front-drive speed clutch 56a is fluidly connected to an eleventh control valve V11 via an eleventh fluid passage 42k. The eleventh control valve V11 is configured to control the first front-drive speed clutch 56a to selectively allow or intermit transmission of power therethrough. The eleventh control valve V11 is fluidly connected to the eleventh fluid passage 42k, the fluid draining passage 40 and the fluid delivery passage 41. The eleventh control valve V11 is configured to adjust, by changing an extent of opening thereof, a flow rate of hydraulic fluid supplied from the hydraulic pump P to an inner portion of a clutch housing of the first front-drive speed clutch 56a and/or adjust a flow rate of hydraulic fluid discharged from the clutch housing of the first front-drive speed clutch 56a to the hydraulic fluid tank T.

For example, when the extent of opening of the eleventh control valve V11 is changed to supply hydraulic fluid into the inner portion of the clutch housing of the first front-drive speed clutch 56a, one or more friction disks are pressed against the clutch housing. Thus, the first front-drive speed clutch 56a engages.

On the other hand, when the extent of opening of the eleventh control valve V11 is changed to discharge hydraulic fluid from the inner portion of the clutch housing of the first front-drive speed clutch 56a, the one or more friction disks are separated away from the clutch housing. Thus, the first front-drive speed clutch 56a disengages.

As shown in FIG. 4, the second front-drive speed clutch 56b is fluidly connected to a twelfth control valve V12 via a twelfth fluid passage 421. The twelfth control valve V12 is configured to control the second front-drive speed clutch 56b to selectively allow or intermit transmission of power therethrough. The twelfth control valve V12 is fluidly connected to the twelfth fluid passage 421, the fluid draining passage 40 and the fluid delivery passage 41. The twelfth control valve V12 is configured to adjust, by changing an extent of opening thereof, a flow rate of hydraulic fluid supplied from the hydraulic pump P into an inner portion of a clutch housing of the second front-drive speed clutch 56b and/or adjust a flow rate of hydraulic fluid discharged from the clutch housing of the second front-drive speed clutch 56b to the hydraulic fluid tank T.

For example, when the extent of opening of the twelfth control valve V12 is changed to supply hydraulic fluid into the inner portion of the clutch housing of the second front-drive speed clutch 56b, one or more friction disks are pressed against the clutch housing. Thus, the second front-drive speed clutch 56bengages.

On the other hand, when the extent of opening of the twelfth control valve V12 is changed to discharge hydraulic fluid from the clutch housing of the second front-drive speed clutch 56b, the one or more friction disks are separated away from the clutch housing. Thus, the second front-drive speed clutch 56b disengages.

When the first front-drive speed clutch 56a disengages and the second front-drive speed clutch 56b engages, the second front-drive speed clutch 56b transmits the driving power from the auxiliary transmission 54 to the front wheels 7F. Thus, a four-wheel drive (4WD) (speed-equalized 4WD mode) is realized such that the front wheels 7F and the rear wheels 7R are driven by the driving power transmitted thereto and rotation of the front wheels 7F and rotation of the rear wheels 7R are substantially equalized in speed with each other.

When the first front-drive speed clutch 56a engages and the second front-drive speed clutch 56b disengages, the first front-drive speed clutch 56a transmits the driving power from the auxiliary transmission 54 to the front wheels 7F. Thus, a different four-wheel drive (4WD) (speed-increased 4WD mode) is realized such that the front wheels 7F and the rear wheels 7R are driven by the driving power transmitted thereto and the rotational of the front wheels 7F is faster than the rotational of the rear wheels 7R.

When both the first front-drive speed clutch 56a and the second front-drive speed clutch 56b disengage, the driving power is not transmitted to the front wheels 7F, so that a two-wheel drive (2WD) in which only the rear wheels 7R are driven is realized.

The transmission 5 need only be configured to cause the traveling device 7 to selectively travel forward or travel rearward, and is not limited to the above-mentioned configuration.

The following will describe in detail braking devices 65 to brake the traveling device 7 as an exemplary device including one or more hydraulic devices C to drive the traveling device 7. As shown in FIG. 2, the working machine 1 includes the braking devices 65. The braking devices 65 include a left braking device 65a and a right braking device 65b. The left braking device 65a and the right braking device 65b are disk-type braking devices 65 and can be each switched between a braking state in which a braking force is applied and a brake-releasing state in which the braking force is released.

The left braking device 65a is provided on a left one of the rear axles 58R to brake the left-rear wheel 7R (first wheel 7R1). The right braking device 65b is provided on a right one of the rear axles 58R to brake the right-rear wheel 7R (second wheel 7R2).

For example, a left brake pedal and a right brake pedal are provided in the vicinity of the driver's seat 6. When the user operating the working machine 1 operates (depresses) the left brake pedal, a left coupling member 66a connected to the left brake pedal moves in a braking direction to set the left braking device 65a to the braking state. When the user operating the working machine 1 operates (depresses) the right brake pedal, a right coupling member 66b connected to the right brake pedal moves in a braking direction to set the right braking device 65b to the braking state.

The left coupling member 66a is operably connected to a left hydraulic actuator 67a (hydraulic device C) to be actuated by hydraulic fluid. The left hydraulic actuator 67a is fluidly connected to a thirteenth control valve V13 via a thirteenth fluid passage 42m. The thirteenth control valve V13 is configured to control the left hydraulic actuator 67a to selectively perform a braking action or a brake releasing action. The thirteenth control valve V13 is fluidly connected to the thirteenth fluid passage 42m, the fluid draining passage 40 and the fluid delivery passage 41. The thirteenth control valve V13 is configured to adjust, by changing an extent of opening thereof, a pressure of hydraulic fluid applied to the left hydraulic actuator 67a such as to actuate the left hydraulic actuator 67a to move the left coupling member 66a in the braking direction.

The right coupling member 66b is operably connected to a right hydraulic actuator 67b (hydraulic device C) to be actuated by hydraulic fluid. The right hydraulic actuator 67b is fluidly connected to a fourteenth control valve V14 via a fourteenth fluid passage 42n.
The fourteenth control valve V14 is configured to control the right hydraulic actuator 67b to selectively perform a braking action or a brake releasing action. The fourteenth control valve V14 is fluidly connected to the fourteenth fluid passage 42n, the fluid draining passage 40 and the fluid delivery passage 41. The fourteenth control valve V14 is configured to, by changing an extent of opening thereof, adjust a pressure of hydraulic fluid applied to the right hydraulic actuator 67b such as to actuate the right hydraulic actuator 67b to move the right coupling member 66b in the braking direction.

As described above, not only the left brake pedal and the right brake pedal but also the left hydraulic actuator 67a and the right hydraulic actuator 67b are individually operable to cause the left braking device 65a and the right braking device 65b to brake the left-rear wheel 7R (first wheel 7R1) and the right-rear wheel 7R (second wheel 7R2), respectively.

In the present example embodiment, the left braking device 65a is provided on the left one of the rear axles 58R and the right braking device 65b is provided on the right one of the rear axles 58R so that the braking devices 65 are configured to brake the rear wheels 7R of the wheels 7F and 7R. However, the braking devices 65 may be provided on left and right ones of the front axles 58F to brake the front wheels 7F instead of or in addition to the left braking device 65a and the right braking device 65b.

At least one of the above-mentioned first to fourteenth control valves V1 to V14 includes a solenoid proportional valve SV or a solenoid proportional valve SV having a variable extent of opening that is changed by energizing or demagnetizing a solenoid thereof based on a control signal (control current) outputted from the controller 70. The solenoid proportional valve SV is configured to adjust a flow rate and/or a pressure of hydraulic fluid supplied from the hydraulic pump P to the corresponding hydraulic device C.

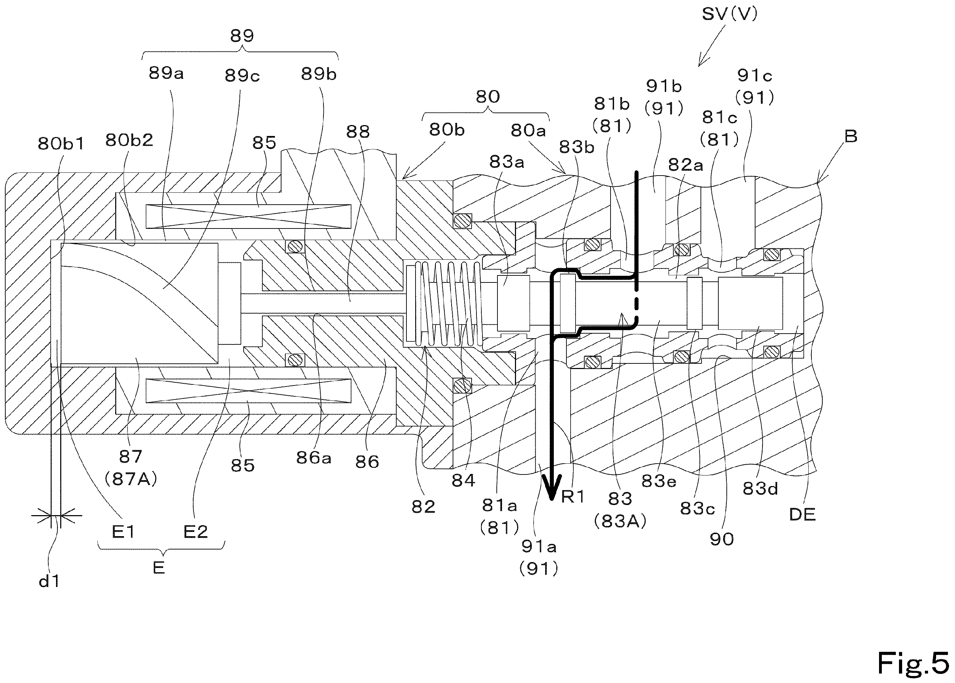

The solenoid proportional valve SV in the present example embodiment is fluidly connected to the hydraulic fluid tank T, the hydraulic pump P and the corresponding hydraulic device C, and includes a solenoid proportional decompression valve to control supply of hydraulic fluid from the hydraulic pump P to the corresponding hydraulic device C and discharge of hydraulic fluid from the corresponding hydraulic device C to the hydraulic fluid tank T. FIG. 5 is an inner view of the solenoid proportional valve SV and a valve body B. The solenoid proportional valve SV is provided in an accommodation hole 90 provided in the valve body B. The working machine 1 includes the valve body B with the plurality of control valves V provided therein. Alternatively, respective valve bodies B may be provided for the respective control valves V. The valve body B includes a plurality of flow paths 91 defining one or more portions of the fluid passages (the fluid draining passage 40, the fluid delivery passage 41 and the first to fourteenth fluid passages 42a to 42n and/or the like) connected to the respective control valves V.

As shown in FIG. 5, the valve body B includes a first flow path 91a, a second flow path 91b and a third flow path 91c as the plurality of flow paths 91. The first flow path 91a defines a portion (an end connected to the control valve V) of the fluid draining passage 40. The first flow path 91a allows hydraulic fluid flowing therein to be drained to the hydraulic fluid tank T. The second flow path 91b defines a portion of the fluid passage (one of the fluid draining passage 40, the fluid delivery passage 41 and the first to fourteenth fluid passage 42a to 42n and/or the like) fluidly connected to the hydraulic device C. The second flow path 91b allows hydraulic fluid to flow therethrough toward the hydraulic device C, and allows hydraulic fluid discharged from the hydraulic device C to flow therethrough. The third flow path 91c defines a portion (an end connected to the control valve V) of the fluid delivery passage 41. The third flow path 91c allows hydraulic fluid delivered from the hydraulic pump P to flow therethrough.

The following describes in detail the solenoid proportional valve SV. The solenoid proportional valve SV includes a housing 80, a spool 83 housed in the housing 80, a coil 85 controlled by the controller 70, and a moving portion 87 (plunger) that causes the spool 83 to move via a magnetic flux generated by the coil 85.

The housing 80 includes cast metal, resin or the like. The housing 80 includes a first housing 80a accommodating the spool 83 and fitted into the accommodation hole 90 and a second housing 80b accommodating the moving portion 87. The housing 80 includes fluid chambers E1, E2 and DE, a plurality of ports 81 and a through-hole 82.

The fluid chambers E1, E2 and DE store hydraulic fluid and have respective volumes that change with movement of the spool 83.

Communication states of the plurality of ports 81 with each other vary depending on the spool 83. The plurality of ports 81 are connected to the respective flow paths 91 formed in the valve body B. The communication states of the plurality of ports 81 with each other vary as the spool 83 moves to change fluidal connections thereof to the plurality of flow paths 91.

As shown in FIG. 5, the plurality of ports 81 are provided in the first housing 80a. The plurality of ports 81 each has a concave shape. In the present example embodiment, the first housing 80a includes a first port 81a, a second port 81b and a third port 81c. The first port 81a is a port (tank port) to communicate with the hydraulic fluid tank T, and is joined to the first flow path 91a. The second port 81b is a port to communicate with the corresponding hydraulic device C, and is joined to the second flow path 91b. The third port 81c is a port (pump port) to be fluidly connected to the hydraulic pump P, and is joined to the third flow path 91c.

The through-hole 82 is defined by inner peripheral (cylindrical) wall surfaces of the housing 80 that continuously extend from a first-side end (left end of FIG. 5) of the housing 80 to a second-side end (right end of FIG. 5) of the housing 80. The through-hole 82 is provided through the first housing 80a and the second housing 80b. The spool 83 and the moving portion 87 are inserted in the through-hole 82 and move in the through-hole 82 from the first-side end to the second-side end and from the second-side end to the first-side end.

The first housing 80a includes a valve hole 82a defining a portion of the through-hole 82, and the first to third ports 81a to 81c reach (are joined to) the valve hole 82a. The valve hole 82a is defined by an inner peripheral wall surface formed in the first housing 80a.

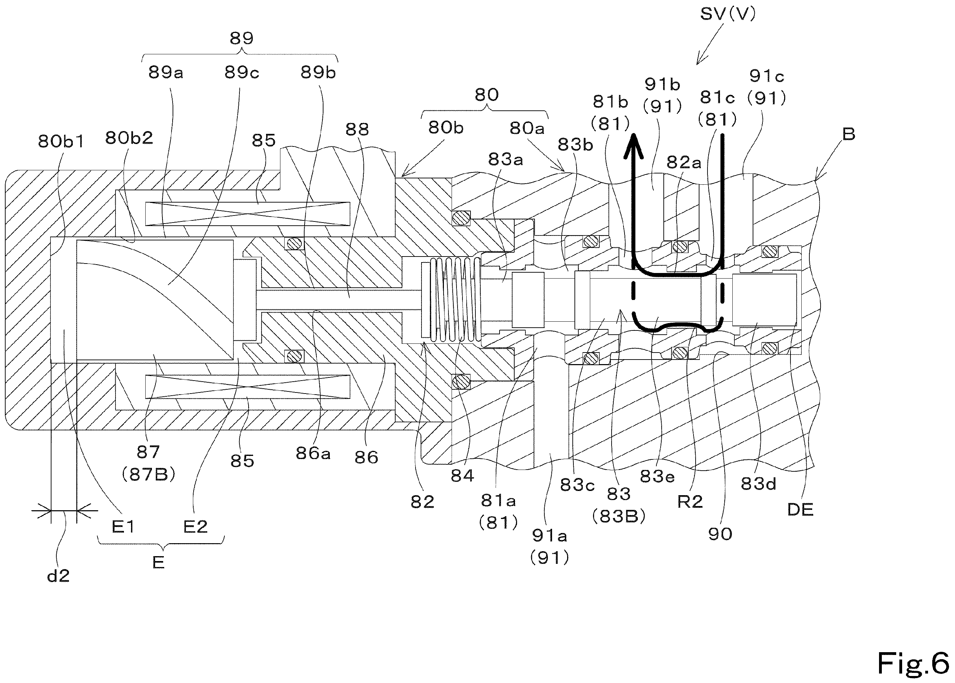

The spool 83 is configured to move in the through-hole 82 longitudinally (from the first-side end to the second-side end through the through-hole 82, and from the second-side end to the first-side end through the through-hole 82) so as to change respective communication states of the first to third ports 81a to 81c. The spool 83 has a columnar form. In the present example embodiment, the spool 83 is configured to, by moving inside the through-hole 82, switch between a discharge position 83A in which the first port 81a and the second port 81b communicate to each other and a supply position 83B in which the second port 81b and the third port 81c communicate to each other. FIG. 5 illustrates the spool 83 when in the discharge position 83A, and FIG. 6 illustrates the spool 83 when in the supply position 83B. FIG. 6 is an inner view of the solenoid proportional valve SV and the valve body B.

As shown in FIG. 5, when the spool 83 switches to the discharge position 83A, hydraulic fluid that has flowed into the second port 81b via the second flow path 91b is discharged to the first flow path 91a via the first port 81a (flow R1). Thus, the hydraulic fluid tank T and the hydraulic device C are fluidly connected to each other via the first port 81a and the second port 81b, so that hydraulic fluid discharged from the hydraulic device C is drained to the hydraulic fluid tank T.

As shown in FIG. 6, when the spool 83 switches to the supply position 83B, hydraulic fluid that has flowed into the third port 81c via the third flow path 91c is supplied to the second flow path 91b via the second port 81b (flow R2). Thus, the hydraulic pump P and the hydraulic device C are fluidly connected to each other via the second port 81b and the third port 81c, so that hydraulic fluid is supplied from the hydraulic pump P to the hydraulic device C.

Specifically, the spool 83 is formed on an outer peripheral surface thereof with a first to fourth lands 83a to 83d arranged in the longitudinal direction thereof. The first to fourth lands 83a to 83d have substantially the same outer diameter. An outer peripheral surface portion of the spool 83 between a second land 83b and a third land 83c is formed as a connection portion 83e to connect the first port 81a and the second port 81b to each other. The connection portion 83e is configured to overlap (coincide with) the first port 81a, the second port 81b and/or the third port 81c.

Specifically, as shown in FIG. 5, when the spool 83 is in the discharge position 83A, the connection portion 83e overlaps the first port 81a and the second port 81b. In this state, the second land 83b and the third land 83c are allowed to change respective port areas of the first port 81a and the second port 81b with movement in the longitudinal direction of the spool 83.

On the other hand, as shown in FIG. 6, when the spool 83 is in the supply position 83B, the connection portion 83e overlaps the second port 81b and the third port 81c. In this state, the second land 83b and the third land 83c are allowed to change respective port areas of the second port 81b and the third port 81c with movement in the longitudinal direction of the spool 83.

When the spool 83 abuts the second housing 80b (a solenoid core 86 described later), a further movement thereof toward the first-side end is prevented. When the spool 83 abuts an inner wall of the valve body B, a further movement thereof toward the second-side end is prevented.

The solenoid proportional valve SV includes an elastic member 84 (for example, a spring) to cause the spool 83 to move to the discharge position 83A. The spring is provided between the first housing 80a and the second housing 80b and causes the spool 83 to move to the second-side end.

The coil 85 includes a solenoid incorporated in the solenoid proportional valve SV. The coil 85 is energized or demagnetized based on a control signal outputted from the controller 70, and generates a magnetic flux. The coil 85 is fixed to the housing 80 (second housing 80b). The solenoid core 86 is provided between the first housing 80a and the second housing 80b of the housing 80. The solenoid core 86 is fixed via staking to a second-side end of the second housing 80b. That is, the solenoid core 86 defines a portion of the inner wall of the housing 80 (second housing 80b).

The first housing 80a is fixed to a second-side end of the solenoid core 86 via staking. The solenoid core 86 is magnetized by excitation of the coil 85 such that the solenoid core 86 and the moving portion 87 attract each other. The solenoid core 86 includes an insertion hole 86a which defines a portion (intermediate portion) of the through-hole 82. A later-discussed shaft 88 is inserted into the insertion hole 86a.

The moving portion 87 includes a plunger including magnetic material to be moved in the longitudinal direction with respect to the housing 80 according to the magnetic flux generated by the coil 85. The moving portion 87 is magnetized by excitation of the coil 85 so that the moving portion 87 and the solenoid core 86 attract each other. A second-side end of the moving portion 87 is connected to the shaft 88 and is connected to a first-side end of the spool 83 via the shaft 88. Thus, as the moving portion 87 moves, the spool 83 is moved. The moving portion 87 is housed in a housing portion E which is included in the housing 80 (second housing 80b).

The housing portion E stores hydraulic fluid and accommodates the moving portion 87, and includes fluid chambers E1 and E2 partitioned therebetween by the moving portion 87. The fluid chambers E1 and E2 of the housing portion E include a space (first space E1) defined by a side-wall 80b1, a peripheral wall 80b2 and the moving portion 87, and a space (second space E2) defined by the moving portion 87, the peripheral wall 80b2 and a first-side end of the solenoid core 86. Respective volumes of the first space E1 and the second space E2 change as the moving portion 87 (spool 83) move.

As shown in FIGS. 5 and 6, the housing 80 includes a communication passage 89 via which the fluid chambers (space E1 and space E2) and a peripheral space around the spool 83 (valve hole 82a) fluidly communicate with each other. The communication passage 89 fluidly communicates with the tank port 81a. Specifically, in the present example embodiment, the communication passage 89 fluidly communicates with the tank port 81a via the valve hole 82a. The communication passage 89 includes one or more gaps between the housing 80 and the moving portion 87. In the present example embodiment, the one or more gaps include a first gap 89a and a second gap 89b.

The first gap 89a is provided between the moving portion 87 and the peripheral wall 80b2. An outer diameter of the moving portion 87 is smaller than an inner diameter of the peripheral wall 80b2, and the first gap 89a formed between the moving portion 87 and the peripheral wall 80b2 brings the first space E1 and the second space E2 into fluidal communication with each other therethrough.

The second gap 89b is provided between the shaft 88 and the insertion hole 86a. An outer diameter of the shaft 88 is smaller than an inner diameter of the insertion hole 86a, and the second gap 89b formed between the shaft 88 and the insertion hole 86a communicates with the valve hole 82a.

Accordingly, the first space E1 communicates with the valve hole 82a via the first gap 89a, the second space E2 and the second gap 89b. In other words, the communication passage 89 via which the first space E1 and the valve hole 82a fluidly communicate with each other includes the second space E2. The second space E2 fluidly communicates with the valve hole 82a via the second gap 89b.

As shown in FIGS. 5 and 6, an outer peripheral surface of the moving portion 87 may be provided thereon with a groove 89c extending between a first-side end and a second-side end thereof. In such a case, the groove 89c defines a portion of the communication passage 89 that brings the first space E1 and the second space E2 into fluidal communication with each other therethrough in addition to the first gap 89a.

As described above, as the moving portion 87 moves to the first-side end to reduce the volume of the first space E1, a hydraulic pressure in the first space E1 increases to discharge hydraulic fluid from the first space E1 to the second space E2 via the first gap 89a and the groove 89c. The hydraulic fluid discharged to the second space E2 is further discharged to the valve hole 82a via the second space E2 and the second gap 89b.

As the moving portion 87 moves to the second-side end to increase the volume of the first space E1, the hydraulic pressure in the first space E1 reduces to suck the hydraulic fluid from the valve hole 82a into the first space E1 via the second gap 89b, the second space E2 and the first gap 89a.

The controller 70 is configured or programmed to cause the moving portion 87 to, in a normal mode, move from a first position 87A at one of opposite axial end-sides thereof to a second position 87B at another of the opposite axial end-sides thereof. Thus, the spool 83 changes the respective communication states of the first, second and third ports 81a, 81b and 81c. The normal mode is realized when the working machine 1 is used to perform work. In the present example embodiment, in the normal mode, the controller 70 is configured or programmed to control the solenoid proportional valve SV according to an operation with the operation device 12.

The first position 87A defines a position in which the hydraulic pressure of hydraulic fluid supplied from the hydraulic pump P to the hydraulic device C via the solenoid proportional valve SV is zero. Specifically, the first position 87A is an initial position in which the controller 70 is configured or programmed to output a demagnetization signal to the coil 85 (solenoid proportional valve SV) so as not to supply electricity to the coil 85. The spool 83 switches to the discharge position 83A when the moving portion 87 is in the first position 87A. In the present example embodiment, the discharge position 83A defines a position in which the spool 83 moved by the elastic member 84 reaches the first-side end of its movement range (where the spool 83 abuts the solenoid core 86).

The second position 87B defines a position in which the hydraulic pressure of hydraulic fluid by which the hydraulic device C is actuated is at a maximum. That is, the second position 87B defines a position in which the hydraulic fluid delivered by the hydraulic pump P is allowed to be supplied at a maximum pressure. When the moving portion 87 is in the second position 87B, the spool 83 switches to the supply position 83B. Further, the second position 87B is defined as a position in which the moving portion 87 has moved away from the solenoid core 86 and does not abut the valve body B. When the moving portion 87 is in the second position 87B, an extent of opening of the solenoid proportional valve SV is lower than a maximum thereof.

When focusing on a length between the moving portion 87 and the side-wall 80b1 in view of a positional relationship of the first position 87A and the second position 87B, as shown in FIGS. 5 and 6, the length (distance d1) between the moving portion 87 in the first position 87A and the side-wall 80b1 is shorter than a length (distance d2) between the moving portion 87 in the second position 87B and the side-wall 80b1 (d1<d2).

The following refers to an electric current value of an electric current sent by the controller 70 to the coil 85 to move the moving portion 87 to the second position 87B as a "first current value".

The normal mode need only be a mode to be used for the working machine 1 when performing work. When the working machine 1 is remotely operated, the controller 70 is configured or programmed to, in the normal mode, control the solenoid proportional valve SV according to a remote operation by a remote user. Additionally, in a case where the working machine 1 includes a sensor to sense environments around the working machine 1 and the controller 70 autonomously controls the working machine 1 (a case where the working machine 1 performs automatic operation), the controller 70 is configured or programmed to, in the normal mode, control the solenoid proportional valve SV based on sensing results of the sensor.

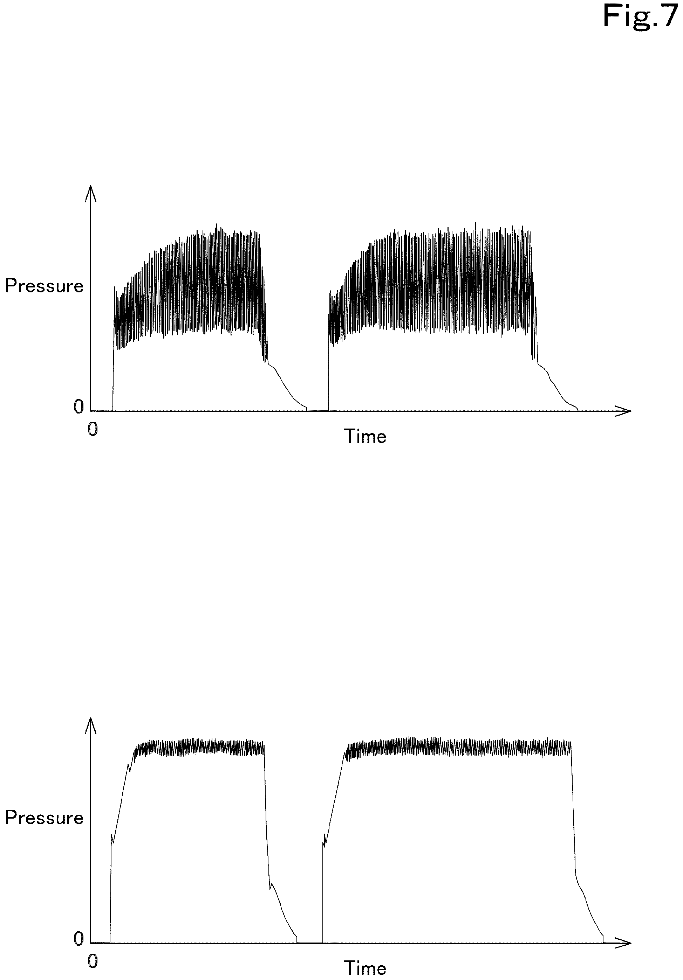

When bubbles are generated in hydraulic fluid inside the fluid chambers such as the first space E1 and the second space E2, a pressure control of hydraulic fluid supplied to the hydraulic device C via the solenoid proportional valve SV becomes unstable. Specifically, pulsation is generated in hydraulic fluid and responsivity of the movements of the moving portion 87 (spool 83) becomes lower. FIG. 7 illustrates exemplary graphs each of which indicates pressures of hydraulic fluid supplied to the hydraulic device C via the solenoid proportional valve SV, one of the graphs indicating the pressure in a case where there is generation of bubbles in the hydraulic fluid in the fluid chambers E1 and E2 (there is air entrainment in hydraulic fluid), and the other of the graphs the pressure in a case where there is no generation of bubbles in the hydraulic fluid in the fluid chambers E1 and E2.

A horizontal axis of each of the exemplary graphs illustrated in FIG. 7 indicates elapsed times, and a vertical axis thereof indicates pressures of hydraulic fluid supplied to the hydraulic device C via the solenoid proportional valve SV. In the example embodiment regarding illustration in FIG. 7, a pressure sensor is provided on the fluid passages (first fluid passage 42a to fourteenth fluid passage 42n) and/or the like connected to the solenoid proportional valve SV and the hydraulic device C, and indicates variation of pressure of hydraulic fluid based on detection results of the detected pressure of hydraulic fluid that flows in the fluid passages. The upper graph of FIG. 7 shows detection results detected by the pressure sensor when there is generation of bubbles in hydraulic fluid in the fluid chambers E1 and E2, and the lower graph of FIG. 7 shows detection results detected by the pressure sensor when there is not generation of bubbles in hydraulic fluid in the fluid chambers E1 and E2.

As clearly shown in FIG. 7, pressure pulsation occurs in hydraulic fluid (hydraulic pulsation) in the case where there is generation of bubbles in hydraulic fluid in the fluid chambers E1 and E2 compared to the case where there is not generation of bubbles in hydraulic fluid in the fluid chambers E1 and E2. Thus, the corresponding hydraulic device C such as a hydraulic cylinder may vibrate and generate an abnormal sound when there is generation of bubbles in hydraulic fluid in the fluid chambers E1 and E2.

The controller 70 of the present example embodiment includes an air-bleeding mode to reduce an influence of air entrainment in hydraulic fluid in the fluid chambers on the hydraulic device C. In the air-bleeding mode, the controller 70 is configured or programmed to control the coil 85 and cause the moving portion 87 to reciprocate a plurality of times in the axial direction of the spool 83.

Thus, it is possible to dissolve the bubbles into hydraulic fluid in the fluid chambers E1 and E2 by changing volumes of the respective fluid chambers E1 and E2 in the air-bleeding mode. In the present example embodiment, the communication passage 89 brings the fluid chambers E1 and E2 into fluidal communication with the peripheral space around the spool 83, so that the moving portion 87 can move to move the bubbles along the periphery of the spool 83. The movement of the moving portion 87 pushes hydraulic fluid in the fluid chambers E1 and E2 to discharge the hydraulic fluid outward from the fluid chambers E1 and E2 (to the spool 83 side) via the communication passage 89, and/or to suck hydraulic fluid involving no bubbles from the spool 83 side into the fluid chambers E1 and E2. Thus, it is possible to discharge the hydraulic fluid involving the dissolved bubbles outward from the fluid chambers E1 and E2 as the moving portion 87 reciprocates a plurality of times.

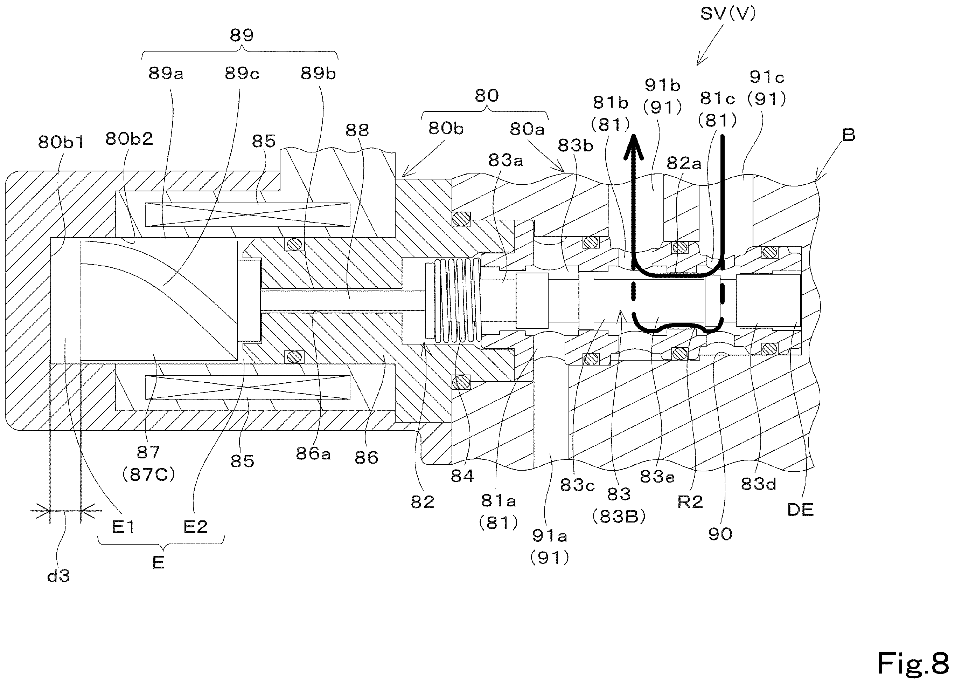

The following describes the air-bleeding mode in detail. In the air-bleeding mode, the controller 70 is configured or programmed to cause the moving portion 87 to reciprocate a plurality of times between the first position 87A and a third position 87C which is more distant from the first position 87A than the second position 87B. FIG. 8 is an inner view of the solenoid proportional valve SV and the valve body B. As shown in FIG. 8, the third position 87C is closer to a second-side end portion of the housing 80b than the second position 87B. In the present example embodiment, the third position 87C defines an end position in which the moving portion 87 abuts the inner wall of the housing 80 (solenoid core 86) and is restricted from moving to the first-side end in the axial direction of the spool 83. That is, when the moving portion 87 is in the third position 87C, the spool 83 moved from the initial position (delivery position 83A) reaches a full-stroke position. That is, in view of a positional relationship of the first position 87A, the second position 87B and the third position 87C, when focusing on a length between the third position 87C and the side-wall 80b1, as shown in FIGS. 5, 6 and 8, the length between the moving portion 87 when in the third position 87C and the side-wall 80b1 is longer than the distance d1 and the distance d2 (d3>d2>d1).

The following refers to an electric current value of electric current sent by the controller 70 to the coil 85 to move the moving portion 87 to the third position 87C as a "second current value". The stronger the current outputted by the controller 70 to the coil 85 is, the more the moving portion 87 moves. Thus, the second current value is higher than the first current value.

As the controller 70 repeatedly alternately outputs a magnetization signal such as to output an electric current with the second current value to the coil 85 and a demagnetization signal such as to output no electric current to the coil 85, the moving portion 87 repeatedly reciprocates between the first position 87A and the third position 87C a plurality of times. For example, the controller 70 is configured or programmed to output the demagnetization signal and the magnetization signal for even periods of time. In the present example embodiment, the controller 70 is configured or controlled to repeatedly perform processes (later referred to as a "series of processes") in which the demagnetization signal is outputted for 0.2 second after the magnetization signal is outputted for 0.2 second.

Neither the period of time for which the controller 70 in the air-bleeding mode outputs the magnetization signal nor the period of time for which the controller 70 in the air-bleeding mode outputs the demagnetization signal is limited to 0.2 second. The number of times for reciprocation of the moving portion 87 may be defined differently among the respective control valves V. An interface such as the display 71 may be used to determine an arbitrary value as the number of times for reciprocation of the moving portion 87.

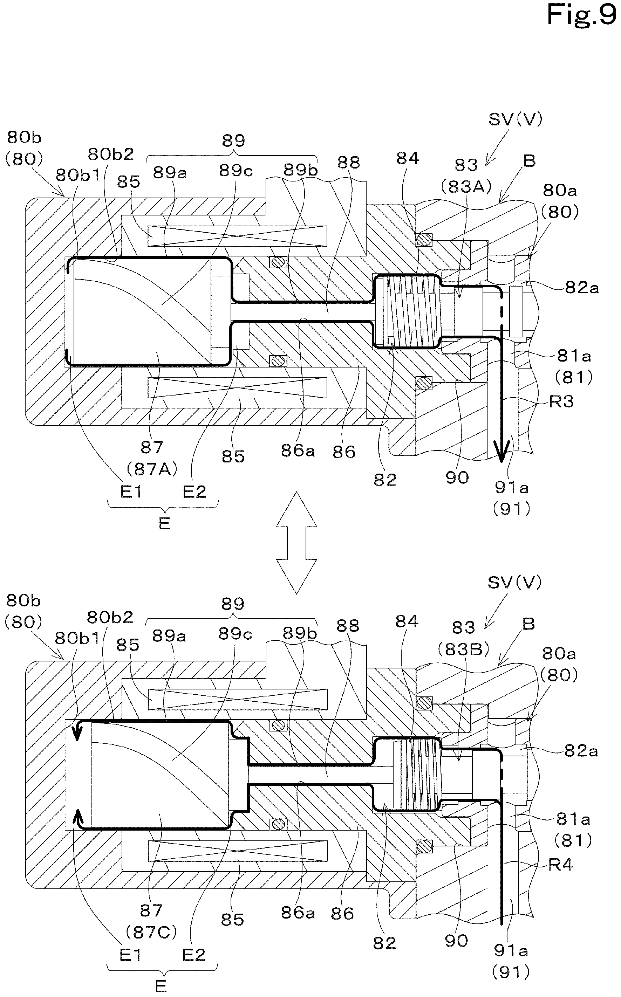

FIG. 9 illustrates movements of the solenoid proportional valve SV during the air-bleeding mode. FIG. 9 indicates flows of hydraulic fluid (flows R3 and R4) in a case where the controller 70 is configured or programmed to cause the moving portion 87 to reciprocate between the first position 87A and the third position 87C in the air-bleeding mode. An upper illustration of FIG. 9 indicates a state in which the moving portion 87 is located in the first position 87A and a lower illustration of FIG. 9 indicates a state in which the moving portion 87 is located in the third position 83C.

When the controller 70 outputs the magnetization signal to the coil 85 after outputting the demagnetization signal to the coil 85, the solenoid core 86 attracts the moving portion 87 via the magnetic flux generated by the coil 85 and the moving portion 87 moves from the first position 87A to the third position 87C to transition from the state shown in the upper illustration of FIG. 9 to the state shown in the lower illustration of FIG. 9. The moving portion 87, when moving from the first position 87A to the third position 87C, takes the bubbles therearound in the first space E1, the groove 89c and the second space E2 together so as to cause the bubbles to move from the first-side end to the second-side end of the first space E1, the groove 89c and the second space E2. When the controller 70 causes the moving portion 87 to move from the first position 87A to the third position 87C, the shaft 88 takes the bubbles accumulating in the insertion hole 86a (second gap 89b) therearound together so as to cause the bubbles to move from the second gap 89b to the valve hole 82a. When the moving portion 87 moves from the first position 87A to the third position 87C, the spool 83 takes the bubbles accumulating in the valve hole 82a therearound together so as to cause the bubbles to move to the second flow path 91b. Additionally, as the volume of the first space E1 increases, the hydraulic pressure in the first space E1 reduces so that hydraulic fluid involving no bubbles can be sucked from the valve hole 82a into the fluid chambers E1 and E2.

On the other hand, when the controller 70 outputs the demagnetization signal to the coil 85 after outputting the magnetization signal to the coil 85, the spool 83 is moved to the discharge position 83A via the elastic member 84, and the moving portion 87 moves to the first position 87A so as to transition from the state shown in the lower illustration of FIG. 9 to the state shown in the upper illustration of FIG. 9. Thus, the volume of the first space E1 reduces, the pressure in the first space E1 increases, and hydraulic fluid inside the first space E1 flows to the second space E2 via the first gap 89a and the groove 89c. The bubbles that have flowed to the second space E2 further flow to the valve hole 82a via the second space E2 and the second gap 82a. Thus, with hydraulic fluid flowing from the first space E1 toward the valve hole 82a (flow R3), it is possible to discharge the bubbles that have been generated in hydraulic fluid in the fluid chambers E1 and E2 from the fluid chambers E1 and E2.

In the air-bleeding mode, the controller 70 is configured or programmed to end the air-bleeding mode after having caused the moving portion 87 to reciprocate a predetermined number of times. That is, the controller 70 is configured or programmed to repeatedly perform a series of processes for the predetermined number of times so as to cause the moving portion 87 to reciprocate the predetermined number of times. The controller 70 is configured or programmed to count the number of times the series of processes has been performed by the controller 70 and set the counted number to zero when the counted number reaches the predetermined number. In the present example embodiment, the controller 70 is configured or programmed to repeatedly perform the series of processes 420 times as the predetermined number of times, and to cause the moving portion 87 to reciprocate 420 times from the first position 87A to the third position 87C.

The number of times for the controller 70 to repeatedly perform the series of processes in the air-bleeding mode is not limited to 420. The number of times to repeatedly perform the series of processes may be defined differently among the respective control valves V, and/or may be changed to an arbitrary value via operation on an interface such as the display 71.

The following describes a mode (normal mode and air-bleeding mode) shift of the controller 70. The working machine 1 (the hydraulic system S of the working machine 1) includes a first manual operator to receive operation thereon. The controller 70 is configured or programmed to be allowed to enter the air-bleeding mode when the first manual operator and a second manual operator (for example, a starter switch 73) both have been operated. The first manual operator includes for example, a display and manual operator 72, the first manual operator being different from the second manual operator 74. In the present example embodiment, the first manual operators 72a and 72b include a home button 72a and a return button 72b, and the controller 70 is configured or programmed to be allowed to enter the air-bleeding mode when the home button 72a, the return button 72b and the starter switch 73 have been operated simultaneously. For purposes of explanation, the following refers to the above-mentioned operation of the first manual operators 72a and 72b and the second manual operator 74 as a "confirmation operation".

In the above-mentioned example embodiment, the controller 70 is configured or programmed to be allowed to enter the air-bleeding mode when the home button 72a and the return button 72b that are the first manual operators 72a and 72b and the starter switch 73 that is the second manual operator 74 have been operated simultaneously. The first manual operators 72a and 72b may be integrated into a single switch. The controller 70 may be configured or programmed to be allowed to enter the air-bleeding mode when either one of the home button 72a or the return button 72b and the starter switch 73 have been operated simultaneously.

The controller 70 may be configured or programmed to be allowed to enter the air-bleeding mode when, in addition to the above-mentioned operation (confirmation operation), the home button 72a and the return button 72b have been operated for a predetermined period of time (for example, 2 seconds).

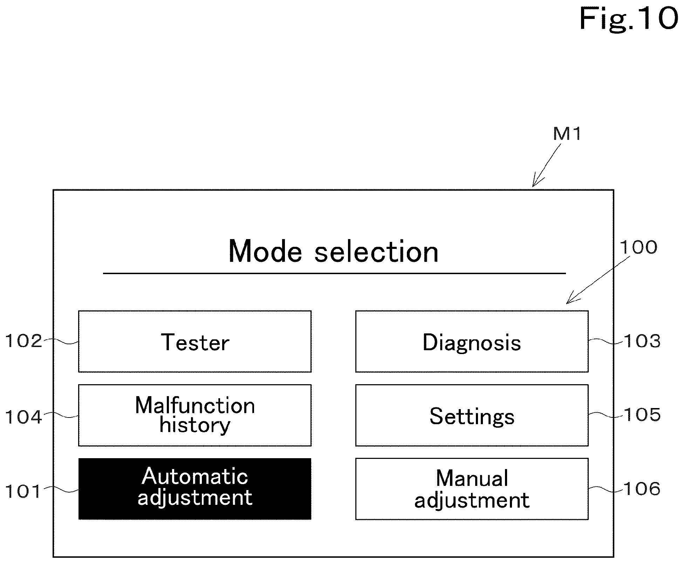

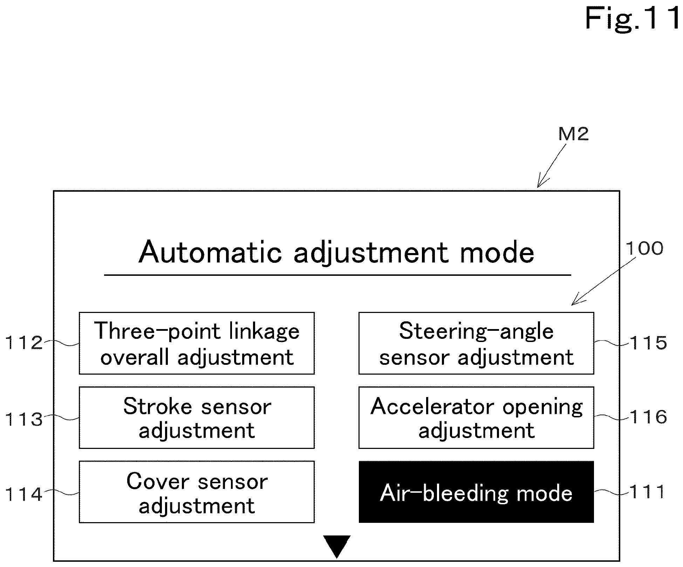

In the present example embodiment, the controller 70 is configured or programmed to be allowed to enter the air-bleeding mode when the user performs the above-mentioned confirmation operation and operates the display 71. Specifically, when the user performs the confirmation operation, the controller 70 is configured or programmed to cause the display 71 to display selection screens M1 and M2 as shown in FIGS.10 and 11. The selection screens M1 and M2 each include a display screen to inform a dealer or a maker about maintenance of the working machine 1 and display optional items (graphical interface) one of which is indicated to select a mode to which the last mode is shifted. In the present example embodiment, the display 71 is configured to display a first selection screen M1 to display category blocks 100 so as to allow a user to select one of the displayed categories to which the respective modes belong.

As shown in FIG. 10, the first selection screen M1 displays one category block 100 (first category block 101) operable to select an automatic adjustment mode including an optional shift to the air-bleeding mode. The first selection screen M1 displays, in addition to the first category block 101, another category block 100 (second category block 102) operable to select a test mode in which pieces of information regarding respective portions of the working machine 1 are indicated, another category block 100 (third category block 103) operable to select a diagnosis mode to diagnose responsibilities of respective portions of the working machine 1, another category block 100 (fourth category block 104) operable to select a malfunction history mode to check a malfunction history of the working machine 1, another category block 100 (fifth category block 105) operable to select a settings mode in which settings for respective portions of the working machine 1 are performed, and another category block 100 (sixth category block 106) operable to select a manual adjustment mode in which one or more setting values to control the working machine 1 are manually determined.

The first selection screen M1 to display the category blocks 100 is only an example and need only display at least the first category block 101, and may display other one or more category blocks 100. Combination of the category blocks 100 displayed on the first selection screen M1 is not limited to the combination of the first to sixth category blocks 101 to 106.

When the user performs operation on the display manual operator 72 to select the first category block 101, a screen displayed by the display 71 shifts from the first selection screen M1 to a second selection screen M2. The second selection screen M2 defines a screen operable to select one of optional modes included in the automatic adjustment mode.

As shown in FIG. 11, the second selection screen M2 displays option blocks 110 to allow a user to select one of the optional modes including the air-bleeding mode and one or more other optional modes belonging to the automatic adjustment mode. The second selection screen M2 displays a first option block 111 operable to be selected to enter the air-bleeding mode, and additionally displays other option blocks including second to sixth option blocks 112 to 116 and/or the like each of which is operable to be selected to allow calibration for corresponding one or more of various sensors.

When the user performs operation on the display manual operator 72 to select the first selection block 111, the controller 70 is configured or programmed to acquire a corresponding operation signal and enter the air-bleeding mode. The controller 70 is configured or programmed to end the air releasing mode and enter the normal mode after performing function as the air-bleeding mode to repeatedly perform the series of processes for the predetermined number of times (420 times).

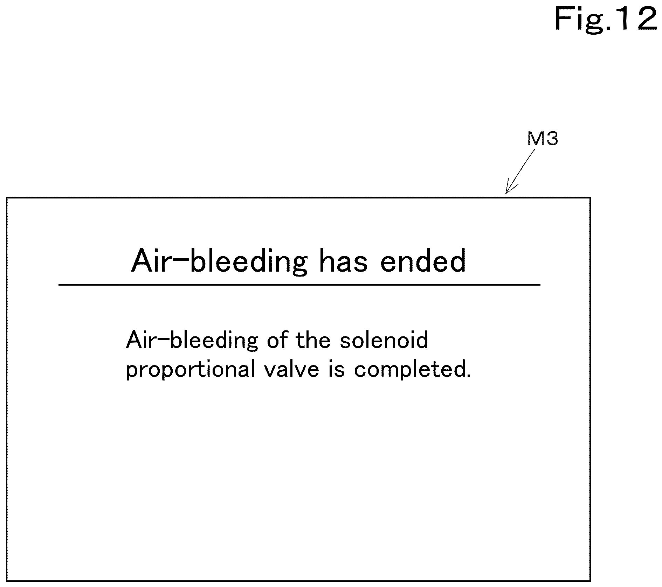

When the controller 70 ends the air-bleeding mode, the display 71 is configured to display a screen M3 indicating that the air-bleeding mode has ended. Specifically, when the controller 70 ends the air-bleeding mode, the controller 70 is configured or programmed to cause the display 71 to display the end screen M3. FIG. 12 illustrates an example of the end screen M3. The end screen M3 displays a message indicating that the air-bleeding mode has ended.

When the air-bleeding mode has ended, the display 71 need only notify the user that the air-bleeding mode has ended, and may shift to the second selection screen M2 instead of the end screen M3.

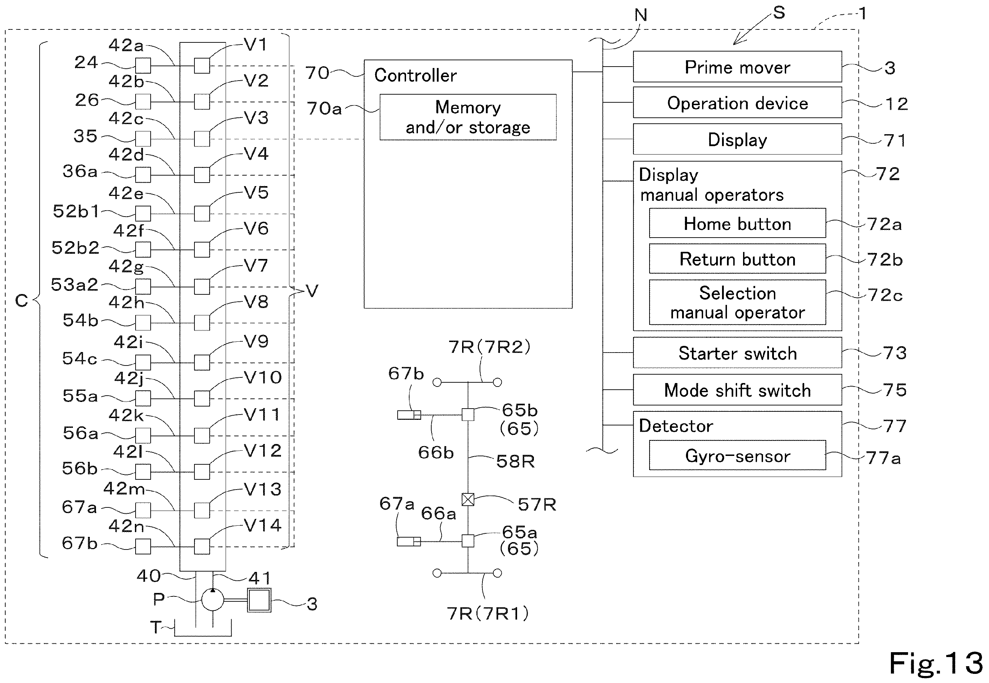

The above-mentioned example embodiment describes a case where the controller 70 is configured or programmed to enter the air-bleeding mode according to an operation on the display 71. Alternatively, the mode may be shifted into the air-bleeding mode by operating a mode shift switch 75 after a confirmation operation is performed. FIG. 13 illustrates a schematic configuration of the hydraulic system S in a first variation. The mode shift switch 75 is operably connected to the controller 70 so that the mode shift switch 75 outputs the operation signal to the controller 70 according to operation thereon by the user. The mode shift switch 75 includes a pushbutton switch (tactile switch), a slide switch, a dial-type switch (dial switch) such as a selector switch and/or the like.

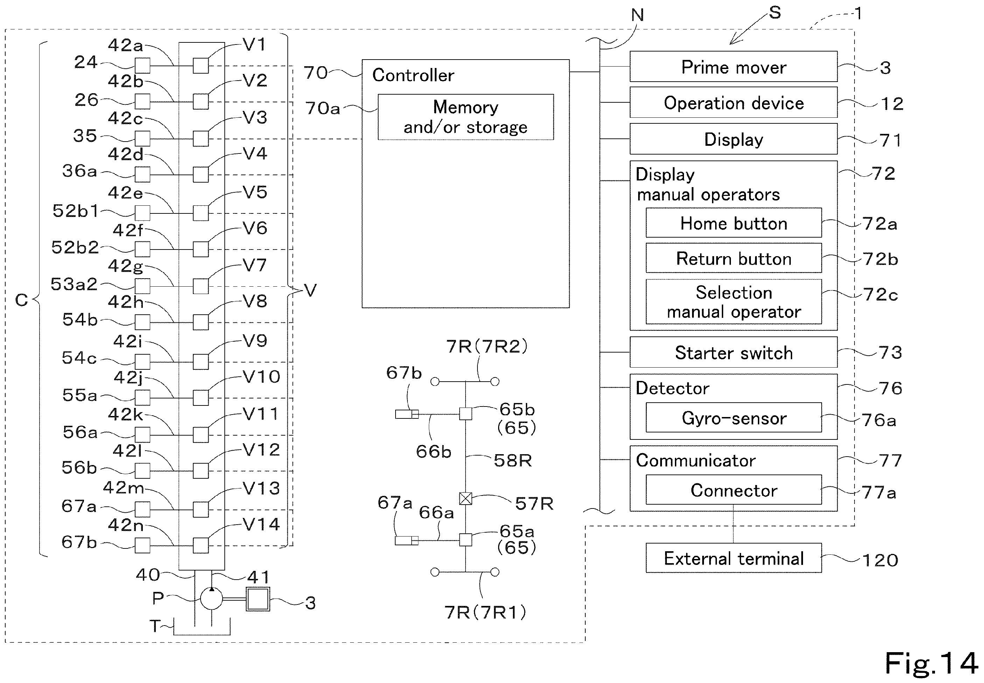

The controller 70 may be configured or programmed to be communicably connected to an external terminal 120, and be allowed to enter the air releasing mode according to a signal outputted from the external terminal 120. FIG. 14 illustrates a schematic configuration of the hydraulic system S in a second variation. As shown in FIG. 14, the hydraulic system S of the working machine 1 (working machine 1) includes a communication device 76. The communication device 76 includes a device to perform wired or wireless communication with the external terminal 120. The external terminal 120 includes a PC and/or the like provided for a dealer or a maker to perform maintenance of the working machine 1.

In the present example embodiment, the communication device 76 includes a connector 76a to which a cable for communication with the external terminal 120 is connected, and the controller 70 is configured or programmed to perform wired communication with the external terminal 120 via the communication device 76. In such a case, the controller 70 is configured or programmed to be allowed to enter the air-bleeding mode according to a signal (instruction signal) outputted from the external terminal 120 such that, when the user performs operation on the external terminal 120 to switch to the air-bleeding mode, the external terminal 120 outputs the instruction signal to the controller 70 via the communication device 76 and the controller 70 enters the air-bleeding mode according to the instruction signal.

The controller 70 need only be configured or programmed to enter the air-bleeding mode at least based on the signal outputted from the external terminal 120. In this regard, the controller 70 may be configured or programmed to enter the air-bleeding mode when the controller 70 receives the signal (communication permission signal) from the external terminal 120 via the communication device 76 and responds to the communication permission signal to establish the communication between the controller 70 and the external terminal 120.

As shown in FIG. 2, the hydraulic system S of the working machine 1 includes a detector 77 to detect an anomaly of the solenoid proportional valve SV and/or the hydraulic device C, and the display 71 may be configured to display a screen M4 to ask for a shift to the air-bleeding mode when the detector 77 has detected an anomaly. For example, when hydraulic pulsation occurs in hydraulic fluid supplied from the solenoid proportional valve SV to the hydraulic device C, the detector 77 detects the anomaly occurring in the hydraulic device C based on a vibration of the hydraulic device C.

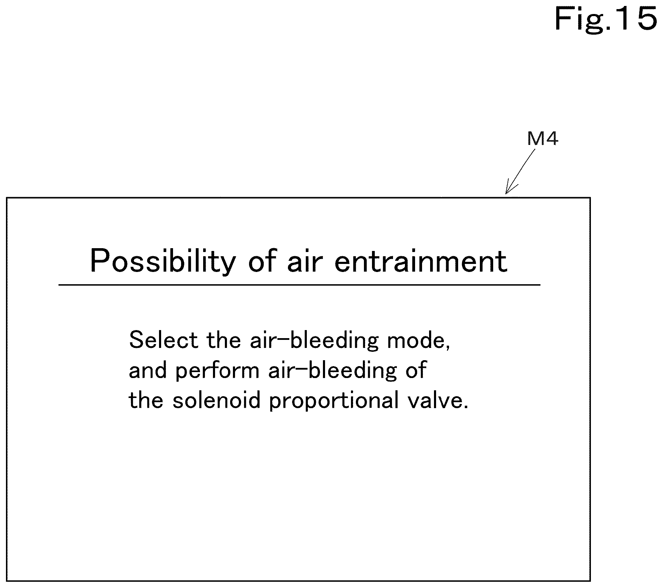

The detector 77 is provided in or on the hydraulic device C and includes, for example, a gyro-sensor 77a to detect respective angular velocities along three axes (axes X, Y and Z). The gyro-sensor 77a is operably connected to the controller 70 to output a detected signal (detection signal) therefrom to the controller 70. For example, the controller 70 is configured or programmed to, when determining that a variation of the detection signal outputted from the gyro-sensor 77a reaches or exceeds a predetermined threshold, determine that an abnormal vibration is occurring in the hydraulic device C. The controller 70 is configured or programmed to, when determining that an anomaly is occurring in the hydraulic device C, cause the display 71 to display a message screen M4 as shown in FIG. 15. FIG. 15 illustrates an example of the message screen M4. The message screen M4 displays a message asking for a shift to the air-bleeding mode.

The detector 77 is not limited to a gyro-sensor 77a provided in or on the hydraulic device C. For example, when hydraulic fluid pulsation is occurring in hydraulic fluid supplied from the solenoid proportional valve SV to the hydraulic device C, the detector 77 may detect an anomaly occurring in the solenoid proportional valve SV based on the pressure of hydraulic fluid supplied from the solenoid proportional valve SV to the hydraulic device C. In such a case, the detector 77 may include a pressure sensor 77b provided in or on the fluid passages (first to fourteenth fluid passages 42a to 42n and/or the like) fluidly connecting the solenoid proportional valve SV to the hydraulic device C.

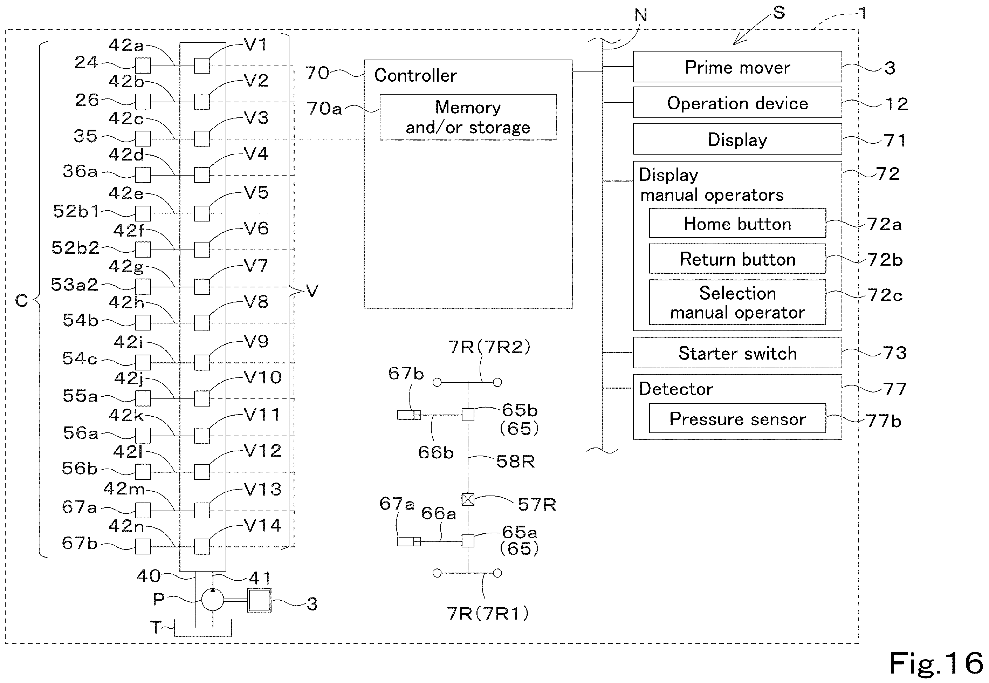

FIG. 16 illustrates a schematic configuration of the hydraulic system S in a third variation. The pressure sensor 77b is operably connected to the controller 70 to output a detected signal (detection signal) to the controller 70. For example, the controller 70 is configured or programmed to, when determining that a variation of the detection signal outputted from the pressure sensor 77b reaches or exceeds a predetermined threshold, determine that hydraulic pulsation is occurring in hydraulic fluid supplied from the solenoid proportional valve SV to the hydraulic device C.

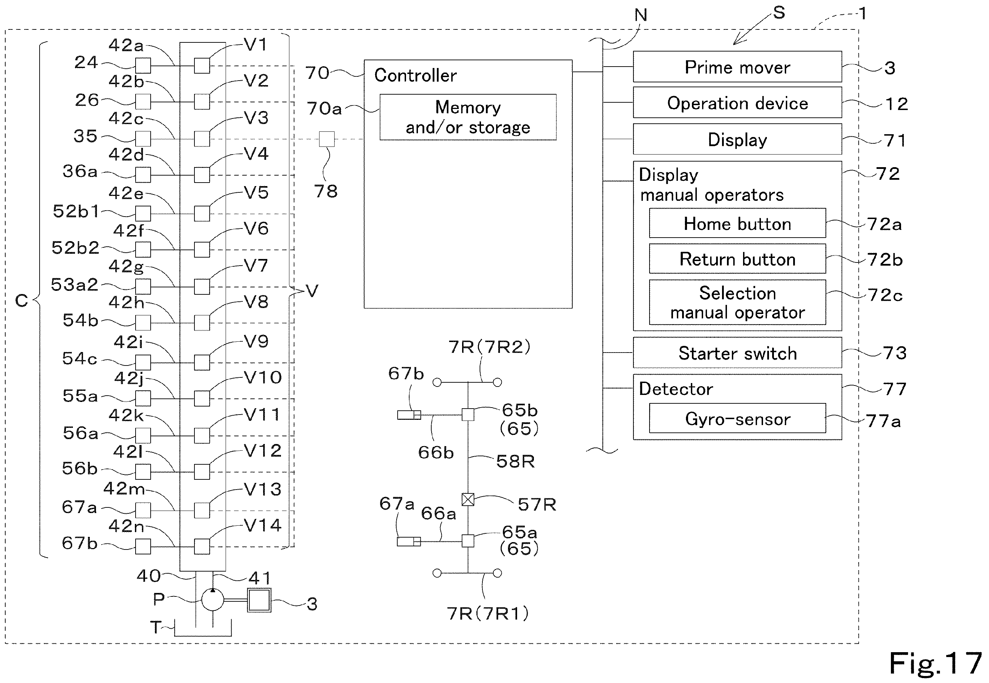

The controller 70 may be configured or programmed to determine whether the solenoid proportional valve SV has been replaced. When the controller 70 determines that the solenoid proportional valve SV has been replaced, the display 71 may display a screen (message screen M4) asking for a shift to the air-bleeding mode. FIG. 17 illustrates a schematic configuration of the hydraulic system S in a fourth variation.

As shown in FIG. 17, the controller 70 is operably connected to a diagnosis circuit 78 to determine whether the solenoid proportional valve SV is operably connected. In this regard, the controller 70 is configured or programmed to determine whether the solenoid proportional valve SV has been replaced based on diagnosis results of the diagnosis circuit 78. Specifically, the controller 70 is configured or programmed to, when determining, based on the diagnosis results of the diagnosis circuit 78, that the solenoid proportional valve SV having been operably connected is operably disconnected and then operably reconnected, determine that the solenoid proportional valve SV has been replaced. The controller 70 is configured or programmed to, when determining that the solenoid proportional valve SV has been replaced, cause the display 71 to display the message screen M4.

The controller 70 configured or programmed to be allowed to enter the air-bleeding mode according to an operation (confirmation operation, operation on the display 71 and/or the like) has been described. However, in a case where a predetermined condition is not fulfilled, entering the air-bleeding mode may be restricted. For example, the controller 70 is configured or programmed to, when the power train (transmission 5) from the prime mover 3 to the traveling device 7 includes any portion where transmission of power is not intermitted, be restricted from entering the air-bleeding mode.

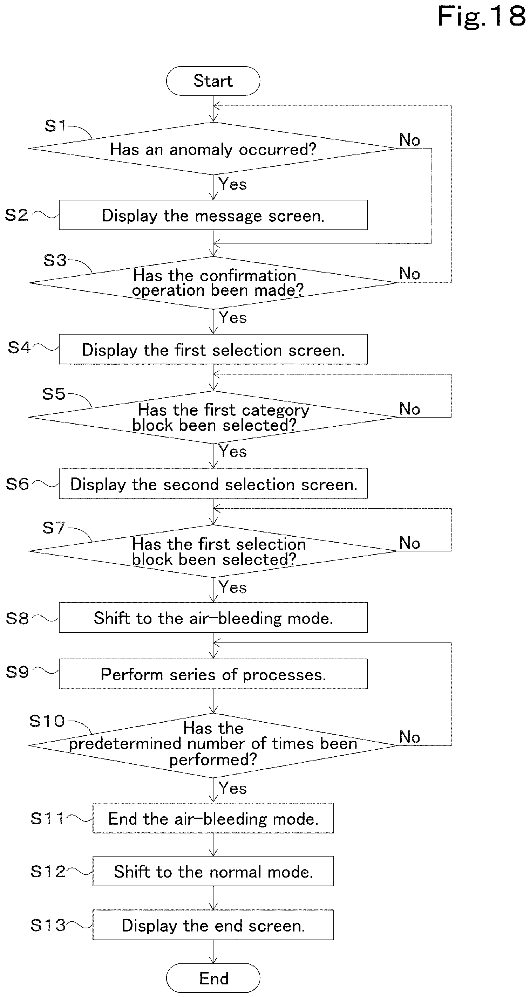

The following uses FIG. 18 to describe a flow of processes related to the controller 70 in the air-bleeding mode. FIG. 18 illustrates a diagram describing the flow of processes related to the controller 70 in the air-bleeding mode. The series of processes shown in FIG. 18 is performed by a CPU of the controller 70 based on software program(s) prestored in a memory of the controller 70.

The controller 70 is configured or programmed to determine whether an anomaly is occurring in the solenoid proportional valve SV and/or the hydraulic device C (S1). The controller 70 is configured or programmed to, when determining, based on the detection signal outputted from the detector 77, that an anomaly is occurring in the solenoid proportional valve SV and/or the hydraulic device C (YES at S1), cause the display 71 to display the message screen M4 (S2).

Then, the controller 70 is configured or programmed to determine whether the first manual operators 72a and 72b and the second manual operator 74 have been operated, and whether the confirmation operation has been performed (S3). The controller 70 is configured or programmed to, when determining that the home button 72a, the return button 72b and the starter switch 73 have been operated at the same time and the confirmation operation has been performed (YES at S3), cause the display 71 to display the first selection screen M1 (S4).

The controller 70 is configured or programmed to, when the first category block 101 on the first selection screen M1 is selected (YES at S5), cause the display 71 to display the second selection screen M2 (S6). Then, the controller 70 is configured or programmed to, when the first option block 111 on the second selection screen M2 is selected (YES at S7), enter the air-bleeding mode (S8).

The controller 70 is configured or programmed to, when entering the air-bleeding mode (S8), perform a series of processes in which the controller 70 outputs a magnetization signal to the coil 85 for a predetermined time (0.2 second) and outputs a demagnetization signal to the coil 85 for a predetermined time (0.2 second) (S9). The controller 70 is configured or programmed to, as performing the series of processes one or more times, count the number of times the controller 70 has performed the series of processes and determine whether the number of times the series of processes has been performed reaches a predetermined number (420 times) (S10).

The controller 70 is configured or programmed to repeatedly perform the series of processes (S9) until the number of times the series of processes has been performed reaches the predetermined number of times (NO at S10). The controller 70 is configured or programmed to, when determining that the number of times the series of processes has been performed has reached the predetermined number of times (YES at S10), end the air-bleeding mode (S11).

The controller 70 is configured or programmed to enter the normal mode (S12) after ending the air-bleeding mode (S11). The controller 70 is configured or programmed to cause the display 71 to display the end screen M3 (S13).

That is, of the series of processes related to the air-bleeding mode that are indicated in FIG. 18, the processes S9 and S10 correspond to steps to cause the moving portion 87 to reciprocate a plurality of times.

In the above-mentioned example embodiment, the first space E1 and the second space E2 partitioned therebetween by the moving portion 87 are each exemplified as the one or more fluid chambers having respective variable volumes that change with movement of the spool 83. However, the one or more fluid chambers need only be portions to store hydraulic fluid and have respective variable volumes that change with movement of the spool 83. Therefore, for example, as shown in FIG. 5 and/or the like, the one or more fluid chambers may include a damper fluid chamber DE partitioned by the spool 83 to suppress a vibration of the spool 83. The damper fluid chamber DE is a space defined by the accommodation hole 90 in the valve body B, the fourth land 83d of the spool 83, and the through-hole 82 (valve hole 82a).

Preferred example embodiments of the present invention provide hydraulic systems S for working machines 1, working machines 1 and methods of controlling working machines 1 described as the following items.

(Item 1) A hydraulic system S for a working machine 1, the hydraulic system S including a hydraulic pump P, a hydraulic device C to be actuated by hydraulic fluid delivered by the hydraulic pump P to drive the working machine 1, a solenoid proportional valve SV to adjust a flow rate and/or a pressure of hydraulic fluid supplied from the hydraulic pump P to the hydraulic device C; and a controller 70 configured or programmed to control the solenoid proportional valve SV; wherein the solenoid proportional valve SV includes a housing 80, a spool 83 housed in the housing 80, a coil 85 to be controlled by the controller 70, and a moving portion 87 to be caused by a magnetic flux generated by the coil 85 to move the spool 83; the housing 80 includes a fluid chamber E1, E2 or DE to store hydraulic fluid, the fluid chamber E1, E2 or DE having a volume that changes with movement of the spool 83; and the controller 70 is configured or programmed to include an air-bleeding mode in which the controller 70 controls the coil 85 to cause the moving portion 87 to reciprocate a plurality of times in an axial direction of the spool 83.

According to the hydraulic system S of item 1, when the fluid chamber E1, E2 or DE, while functioning as a damper to suppress a vibration of the spool 83, is invaded by bubbles (air), the controller 70 reduces an influence of air entrainment in hydraulic fluid in the fluid chamber E1, E2 or DE on the hydraulic device C by causing the moving portion 87 to reciprocate a plurality of times in the air-bleeding mode.

(Item 2) The hydraulic system S according to item 1, wherein the controller 70 is configured or programmed to, in a normal mode, cause the moving portion 87 to move from a first position 87A to a second position 87B in the axial direction; and in the air-bleeding mode, cause the moving portion 87 to reciprocate between the first position 87A and a third position 87C a plurality of times, the third position 87C being further away from the first position 87A than the second position 87B is from the first position 87A in the axial direction.

According to the hydraulic system S of item 2, when the normal mode is realized, the moving portion 87 is kept from abutting or being stuck to an inner wall of the housing 80, and when the air-bleeding mode is realized, the moving portion 87 reciprocates the plurality of times so as to cause the bubbles around the moving portion 87 to move from the fluid chamber E1 or E2 and/or so as to cause the bubbles in the fluid chamber E1, E2 or DE to dissolve into hydraulic fluid in the fluid chamber E1, E2 or DE. Thus, it is possible to ensure both a suppression of shocks and adherence of the solenoid proportional valve SV when operating and a reduction of the influence of air entrainment in hydraulic fluid in the fluid chamber E1, E2 or DE by appropriately switching between the normal mode and the air-bleeding mode.

(Item 3) The hydraulic system S according to item 2, wherein the second position 87B is a position in which a pressure of hydraulic fluid by which the hydraulic device C is actuated is at a maximum.

According to the hydraulic system S of item 3, the moving portion 87 is not limited by actuation of the hydraulic device C and it is possible to keep the moving portion 87 from abutting or being stuck to the inner wall of the housing 80.

(Item 4) The hydraulic system S according to item 2 or 3, wherein the third position 87C is an end position in which the moving portion 87 abuts the inner wall of the housing 80.

According to the hydraulic system S of item 4, since the moving portion 87 moves across a relatively long distance from the first position 87A to the third position 87C, it is possible to cause the bubbles around the moving portion 87 to move significantly. It is possible to make a change in the volume of the fluid chamber E1, E2 or DE, i.e., a change in pressure applied to hydraulic fluid inside the fluid chamber E1, E2 or DE, relatively large, so that it is possible to divide the bubbles into smaller bubbles, and it is possible to dissolve the bubbles into hydraulic fluid.

(Item 5) The hydraulic system S according to item 4, wherein the solenoid proportional valve SV includes a solenoid core 86 to be cause by the magnetic flux generated by the coil 85 to attract the moving portion 87, the solenoid core 86 defining a portion of the inner wall of the housing 80, and the third position 87C is the end position in which the moving portion 87 abuts the solenoid core 86.

According to the hydraulic system S of item 5, the moving portion 87 can further surely move the relatively long distance from the first position 87A to the third position 87C and can make a change in the volume of the fluid chamber E1, E2 or DE relatively large.

(Item 6) The hydraulic system S according to any one of items 2 to 5, wherein the first position 87A is a position in which the pressure of hydraulic fluid supplied from the hydraulic pump P to the hydraulic device C via the solenoid proportional valve SV is zero.

According to the hydraulic system S of item 6, since the moving portion 87 moves across the relatively long distance from the first position 87A to the third position 87C, it is possible to cause the bubbles around the moving portion 87 to move significantly. It is possible to make a change in the volume of the fluid chambers E1, E2 and DE, i.e., a change in pressure applied to hydraulic fluid inside the fluid chamber E1, E2 or DE, relatively large. Thus, it is possible to divide the bubbles into smaller bubbles, and it is possible to dissolve the bubbles into hydraulic fluid.

(Item 7) The hydraulic system S according to any one of items 2 to 6, wherein the first position 87A is an initial position in which electricity is not supplied to the coil 85.

According to the hydraulic system S of item 7, since the moving portion 87 moves across the relatively long distance from the first position 87A to the third position 87C, it is possible to cause the bubbles around the moving portion 87 to move significantly. It is possible to make a change in the volume of the fluid chamber E1, E2 or DE, i.e., a change in pressure applied to hydraulic fluid inside the fluid chamber E1, E2 or DE, relatively large. Thus, it is possible to divide the bubbles into smaller bubbles, and it is possible to dissolve the bubbles into hydraulic fluid.

(Item 8) The hydraulic system S according to any one of items 1 to 7, wherein the fluid chamber is partitioned by the moving portion 87 into a plurality of fluid chambers E1 and E2 each of which has a volume that changes as the moving portion 87 moves.

According to the hydraulic system S of item 8, a pressure of hydraulic fluid in each of the fluid chambers E1 and E2 is increased as the moving portion 87 reciprocates a plurality of times. Accordingly, it is possible to cause the bubbles to dissolve into the hydraulic fluid.

(Item 9) The hydraulic system S according to any one of items 1 to 8, wherein the moving portion 87 includes a plunger including a magnetic material to be moved by the magnetic flux generated by the coil 85; and the housing 80 includes a communication passage 89 via which the plurality of fluid chambers E1 and E2 and a periphery of the spool 83 communicate with each other.

According to the hydraulic system S of item 9, it is possible to, via movement of the moving portion 87, discharge hydraulic fluid in the fluid chambers E1 and E2 by pushing hydraulic fluid outward from the fluid chambers E1 and E2 (to the periphery of the spool 83 and/or the like) via the communication passage 89, and/or to suck hydraulic fluid involving no bubbles from the spool 83 side into the fluid chambers E1 and E2 via the communication passage 89. Thus, as the moving portion 87 reciprocates a plurality of times, the bubbles dissolve into the hydraulic fluid in the fluid chambers E1 and E2 and the hydraulic fluid involving the dissolved bubbles is discharged outward from the fluid chambers E1 and E2. Accordingly, it is possible to reduce instability in adjustment of a pressure of hydraulic fluid to be supplied to the hydraulic device C via the solenoid proportional valve SV from being unstably adjusted, reduce pulsation in pressure of hydraulic fluid, and restrain a responsiveness in movement of the spool 83 from dropping.

(Item 10) The hydraulic system S according to item 9, further including a hydraulic fluid tank T to store hydraulic fluid; wherein the housing 80 includes a plurality of ports 81 to communicate with each other in a manner that is changed by the spool 83; and the communication passage 89 communicates with a tank port 81a which is one of the plurality of ports 81 that communicates with the hydraulic fluid tank T.

According to the hydraulic system S of item 10, it is possible to, via movement of the moving portion 87, discharge hydraulic fluid from the fluid chambers E1 and E2 to the hydraulic fluid tank T via the communication passage 89 and the tank port 81a, and/or suck hydraulic fluid from hydraulic fluid tank T into the fluid chambers E1 and E2 via the communication passage 89 and the tank port 81a.

(Item 11) A working machine 1 including: the hydraulic system S according to any one of items 1 to 10; a machine body 2 including the hydraulic pump P, the hydraulic device C, and the solenoid proportional valve SV; and a working device 20 and/or a traveling device 7 provided in or on the machine body 2 and driven by the hydraulic device C.

According to the working machine 1 of item 11, even in the case where the solenoid proportional valve SV is provided in or on the machine body 2, to the air-bleeding mode can be realized to cause the bubbles in the fluid chamber or chambers E1, E2 and/or DE to dissolve into hydraulic fluid in the fluid chamber or chambers E1, E2 and/or DE so that it is possible to restrain a shock or an abnormal sound that may be generated because of bubbles entering in the fluid chamber or chambers E1 and/or E2 when the hydraulic device C is driven.

(Item 12) The working machine 1 according to item 11, further including: a first manual operator 72a or 72b to be operated, a prime mover 3 to supply power to the hydraulic pump P; and a second manual operator 74 used to start the prime mover 3, the second manual operator 74 being different from the first manual operator 72a or 72b; wherein the controller 70 is configured or programmed to be allowed to enter the air-bleeding mode when the second manual operator 74 is operated together with the first manual operator 72a or 72b.

According to the working machine 1 of item 12, since the prime mover 3 needs to start so as to realize the air-bleeding mode, it is possible to keep the controller 70 from entering the air-bleeding mode when the working machine 1 performs work via the working device 20 or travels via the traveling device 7.

(Item 13) The working machine 1 according to item 11 or 12, wherein the controller 70 is configured or programmed to communicably connect to: an external terminal 120; and be allowed to enter the air-bleeding mode according to a signal outputted from the external terminal 120.

According to the working machine 1 of item 13, since it is necessary to communicably connect the external terminal 120 for entering the air-bleeding mode, it is possible to keep the controller 70 from entering the air-bleeding mode when the working machine 1 performs work via the working device 20 or travels via the traveling device 7.

(Item 14) The working machine 1 according to any one of items 11 to 13, wherein the controller 70 is configured or programmed to end the air-bleeding mode when the moving portion 87 has reciprocated a predetermined number of times during the air-bleeding mode.

According to the working machine 1 of item 14, it is possible to reduce the influence of air entrainment in hydraulic fluid in the fluid chamber or chambers E1, E2 and/or DE on the hydraulic device C without necessitating an operation by the user.

(Item 15) The working machine 1 according to item 14, further including a display 71 to display information; wherein the display 71 is configured to display, when the controller 70 has ended the air-bleeding mode, a screen indicating that the air-bleeding mode has ended.

According to the working machine 1 of item 15, it is possible for the user to easily and reliably confirm that the air-bleeding mode has ended.

(Item 16) The working machine 1 according to any one of items 11 to 15, further including: a display 71 to display information; and a detector 77 to detect an anomaly in the solenoid proportional valve SV and/or the hydraulic device C; wherein the display 71 is configured to display a screen asking for a shift to the air-bleeding mode when the detector 77 has detected an anomaly.

According to the working machine 1 of item 16, it is possible for the user to easily and reliably confirm that it is necessary to shift to the air-bleeding mode.

(Item 17) The working machine 1 according to any one of items 11 to 16, further including a display 71 to display information; wherein the controller 70 is configured or programmed to determine that the solenoid proportional valve SV has been replaced; and the display 71 is configured to display, when the controller 70 has determined that the solenoid proportional valve SV has been replaced, a screen asking for a shift to the air-bleeding mode.

According to the working machine 1 of item 17, it is possible to for the user to easily and reliably confirm that it is necessary to shift to the air-bleeding mode.

(Item 18) A method of controlling the working machine 1 which includes a method of controlling the working machine 1 including a hydraulic pump P; a hydraulic device C to be actuated by hydraulic fluid delivered by the hydraulic pump P to drive the working machine 1; a solenoid proportional valve SV including fluid chambers E1, E2 and DE to store hydraulic fluid, the fluid chambers E1, E2 and DE having a volume that changes with movement of a spool 83 and being configured to adjust a flow rate and/or a pressure of hydraulic fluid to be supplied from the hydraulic pump P to the hydraulic device C; and a controller 70 configured or programmed to control the solenoid proportional valve SV; the method comprising the step of causing the controller 70 to control a coil 85 included in the solenoid proportional valve SV to cause a moving portion 87, which is configured to be caused by a magnetic flux generated by the coil to push the spool 83, to reciprocate a plurality of times in an axial direction of the spool 83.

According to the method of controlling the working machine 1 of item 18, when the fluid chamber E1, E2 or DE, while functioning as a damper to suppress a vibration of the spool 83, is invaded by bubbles (air), the controller 70 reduces an influence of air entrainment in hydraulic fluid in the fluid chamber E1, E2 or DE on the hydraulic device C by causing the moving portion 87 to reciprocate a plurality of times in the air-bleeding mode.

While preferred embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1:: Working machine
- 2:: Machine body
- 3:: Prime mover
- 7:: Traveling device
- 20:: Working device
- 70:: Controller
- 71:: Display
- 72a:: First manual operator
- 72b:: First manual operator
- 74:: Second manual operator
- 77:: Detector
- 80:: Housing
- 81:: Port
- 81a:: Tank port
- 83:: Spool
- 85:: Coil
- 86:: Solenoid core
- 87:: Moving portion
- 87A:: First position
- 87B:: Second position
- 87C:: Third position
- 89:: Communication passage
- 120:: External terminal
- C:: Hydraulic device
- E1:: Fluid chamber
- E2:: Fluid chamber
- P:: Hydraulic pump
- S:: Hydraulic system
- SV:: Solenoid proportional valve
- T:: Hydraulic fluid tank

## Claims

1. A hydraulic system for a working machine, the hydraulic system comprising:
a hydraulic pump;
a hydraulic device to be actuated by hydraulic fluid delivered by the hydraulic pump to drive the working machine;
a solenoid proportional valve to adjust a flow rate and/or a pressure of hydraulic fluid supplied from the hydraulic pump to the hydraulic device; and
a controller configured or programmed to control the solenoid proportional valve;
wherein
the solenoid proportional valve includes a housing, a spool housed in the housing, a coil to be controlled by the controller, and a moving portion to be caused by a magnetic flux generated by the coil to move the spool;
the housing includes a fluid chamber to store hydraulic fluid, the fluid chamber having a volume that changes with movement of the spool; and
the controller is configured or programmed to include an air-bleeding mode in which the controller controls the coil to cause the moving portion to reciprocate a plurality of times in an axial direction of the spool.

2. The hydraulic system according to claim 1, wherein
the controller is configured or programmed to:
in a normal mode, cause the moving portion to move from a first position to a second position in the axial direction; and
in the air-bleeding mode, cause the moving portion to reciprocate between the first position and a third position a plurality of times, the third position being further away from the first position than the second position is from the first position in the axial direction.

3. The hydraulic system according to claim 2, wherein
the second position is a position in which a pressure of hydraulic fluid by which the hydraulic device is actuated is at a maximum.

4. The hydraulic system according to claim 3, wherein
the third position is an end position in which the moving portion abuts an inner wall of the housing.

5. The hydraulic system according to claim 4, wherein
the solenoid proportional valve includes a solenoid core to be caused by the magnetic flux generated by the coil to attract the moving portion, the solenoid core defining a portion of the inner wall of the housing, and
the third position is the end position in which the moving portion abuts the solenoid core.

6. The hydraulic system according to any one of claims 2 to 5, wherein
the first position is a position in which the pressure of the hydraulic fluid supplied from the hydraulic pump to the hydraulic device via the solenoid proportional valve is zero.

7. The hydraulic system according to any one of claims 2 to 5, wherein
the first position is an initial position in which electricity is not supplied to the coil.

8. The hydraulic system according to claim 1, wherein
the fluid chamber is partitioned by the moving portion into a plurality of fluid chambers each of which has a volume that changes as the moving portion moves.

9. The hydraulic system according to claim 8, wherein
the moving portion includes a plunger including a magnetic material to be moved by the magnetic flux generated by the coil; and
the housing includes a communication passage via which the plurality of fluid chambers and a periphery of the spool communicate with each other.

10. The hydraulic system according to claim 9, further comprising:
a hydraulic fluid tank to store hydraulic fluid; wherein
the housing includes a plurality of ports to communicate with each other in a manner that is changed by the spool; and
the communication passage communicates with a tank port which is one of the plurality of ports that communicates with the hydraulic fluid tank.

11. A working machine comprising:
the hydraulic system according to claim 1;
a machine body including the hydraulic pump, the hydraulic device, and the solenoid proportional valve; and
a working device and/or a traveling device provided in or on the machine body and driven by the hydraulic device.

12. The working machine according to claim 11, further comprising:
a first manual operator to be operated;
a prime mover to supply power to the hydraulic pump; and
a second manual operator to be operated to start the prime mover, the second manual operator being different from the first manual operator; wherein
the controller is configured or programmed to be allowed to enter the air-bleeding mode when the second manual operator is operated together with the first manual operator.

13. The working machine according to claim 11, wherein
the controller is configured or programmed to:
communicably connect to an external terminal; and
be allowed to enter the air-bleeding mode according to a signal outputted from the external terminal.

14. The working machine according to claim 11, wherein
the controller is configured or programmed to end the air-bleeding mode when the moving portion has reciprocated a predetermined number of times during the air-bleeding mode.

15. The working machine according to claim 14, further comprising:
a display to display information; wherein
the display is configured to display, when the controller has ended the air-bleeding mode, a screen indicating that the air-bleeding mode has ended.

16. The working machine according to claim 11, further comprising:
a display to display information; and
a detector to detect an anomaly in the solenoid proportional valve and/or the hydraulic device; wherein
the display is configured to display a screen asking for a shift to the air-bleeding mode when the detector has detected an anomaly.

17. The working machine according to claim 11, further comprising:
a display to display information; wherein
the controller is configured or programmed to determine that the solenoid proportional valve has been replaced; and
the display is configured to display, when the controller has determined that the solenoid proportional valve has been replaced, a screen asking for a shift to the air-bleeding mode.

18. A method of controlling a working machine which includes: a hydraulic pump; a hydraulic device to be actuated by hydraulic fluid delivered by the hydraulic pump to drive the working machine; a solenoid proportional valve including a fluid chamber to store hydraulic fluid, the fluid chamber having a volume that changes with movement of a spool, the solenoid proportional valve being configured to adjust a flow rate and/or a pressure of hydraulic fluid supplied from the hydraulic pump to the hydraulic device; and a controller configured or programmed to control the solenoid proportional valve; the method comprising the step of:
causing the controller to control a coil included in the solenoid proportional valve to cause a moving portion, which is configured to be caused by a magnetic flux generated by the coil to push the spool, to reciprocate a plurality of times in an axial direction of the spool.
